(19) Europäisches Patentamt
European Patent Office
Office européen des brevets

(11) **EP 4 468 639 A1**

(12) **EUROPEAN PATENT APPLICATION**
published in accordance with Art. 153(4) EPC

(43) Date of publication:
**27.11.2024 Bulletin 2024/48**

(21) Application number: **23759103.7**

(22) Date of filing: **17.02.2023**

(51) International Patent Classification (IPC):
**H04L 5/00** (2006.01)     **H04W 74/00** (2009.01)

(52) Cooperative Patent Classification (CPC):
**H04L 5/00; H04W 74/00; H04W 74/08**

(86) International application number:
**PCT/CN2023/076911**

(87) International publication number:
**WO 2023/160478 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.02.2022 CN 202210173063**

(71) Applicant: **Huawei Technologies Co., Ltd.
Shenzhen, Guangdong 518129 (CN)**

(72) Inventor: **FAN, Qiang
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND APPARATUS**

(57)     This application relates to the field of communication technologies, and discloses a communication method and apparatus. The method includes: A terminal device receives first configuration information and second configuration information from an access network device, where the first configuration information is used to configure a first transmission occasion corresponding to a first SSB, the second configuration information is used to configure M second transmission occasions corresponding to the first transmission occasion, and the M second transmission occasions and the first transmission occasion correspond to a same SSB. Further, the terminal device may initially transmit, on the first transmission occasion, a preamble corresponding to the first SSB, and retransmit the preamble on each of the M second transmission occasions, where M is a positive integer. In this way, because the access network device configures, for the terminal device by using the second configuration information, the transmission occasion used to retransmit the preamble, the terminal device can implement preamble retransmission, so as to increase a probability that the access network device successfully receives the preamble and increase a random access success probability of the terminal device.

FIG. 3

**Description**

**CROSS-REFERENCE TO RELATED APPLICATIONS**

This application claims priority to Chinese Patent Application No. 202210173063.1, filed with the China National Intellectual Property Administration on February 24, 2022 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

In a wireless communication system, a terminal device may attempt to access a network by sending a random access signal to an access network device. The random access signal is used to initiate a random access process. For example, the random access signal may be a preamble. The terminal device may exchange information with the access network device by using the random access process, to implement uplink time synchronization with the access network device.

However, because a carrier frequency of a 5th generation (5th generation, 5G) communication system is high, and a path loss of a radio channel is large, after the terminal device sends the preamble, a case in which the access network device fails to receive the preamble sent by the terminal device may occur due to the large path loss, resulting in a random access failure.

**SUMMARY**

This application provides a communication method and apparatus, to implement preamble retransmission and increase a random access success probability of a terminal device.

According to a first aspect, an embodiment of this application provides a communication method. The method may be applied to a terminal device or a module in a terminal device. For example, the method is applied to a terminal device. In the method, the terminal device receives first configuration information and second configuration information from an access network device. The first configuration information is used to configure a first transmission occasion corresponding to a first synchronization signal broadcast channel block SSB, the second configuration information is used to configure M second transmission occasions corresponding to the first transmission occasion, and the M second transmission occasions and the first transmission occasion correspond to a same SSB. Further, the terminal device may initially transmit, on the first transmission occasion, a preamble corresponding to the first SSB, and retransmit the preamble on each of the M second transmission occasions, where M is a positive integer.

According to the foregoing method, because the access network device configures a second-type transmission occasion for the terminal device by using the second configuration information, the terminal device can implement preamble retransmission on the second-type transmission occasion, so as to increase a probability that the access network device successfully receives the preamble, and increase a random access success probability of the terminal device.

In a possible design, the second configuration information includes at least one of the following: a value of M; first information, where the first information is used to determine time domain positions of the M second transmission occasions; and second information, where the second information is used to determine frequency domain positions of the M second transmission occasions.

In a possible design, the first information includes: a first time domain interval, where the first time domain interval is a time domain interval between any adjacent transmission occasions among the first transmission occasion and the M second transmission occasions; or M time domain intervals, where the M time domain intervals include a time domain interval between the first transmission occasion and a 1st second transmission occasion in the M second transmission occasions, and a time domain interval between each of the M second transmission occasions except the 1st second transmission occasion and a previous second transmission occasion, or a time domain interval between each of the M second transmission occasions and the first transmission occasion.

In a possible design, the second information includes: a first frequency domain interval, where the first frequency domain interval is a frequency domain interval between any adjacent transmission occasions among the first transmission occasion and the M second transmission occasions; or M frequency domain intervals, where the M frequency domain intervals include a frequency domain interval between the first transmission occasion and the 1st second transmission

occasion in the M second transmission occasions, and a frequency domain interval between each of the M second transmission occasions except the 1st second transmission occasion and a previous second transmission occasion, or a frequency domain interval between each of the M second transmission occasions and the first transmission occasion, or a frequency domain interval between each of the M second transmission occasions and a reference point.

In a possible design, the M second transmission occasions respectively belong to M sets of transmission occasions. The first information includes time domain position information corresponding to each of the M sets of transmission occasions. The second information includes frequency domain position information corresponding to each of the M sets of transmission occasions.

In a possible design, the second configuration information includes at least one of the following: a value of M; a first offset, where the first offset is used to determine a first time domain interval and a first frequency domain interval, the first time domain interval is a time domain interval between any adjacent transmission occasions among the first transmission occasion and the M second transmission occasions, and the first frequency domain interval is a frequency domain interval between any adjacent transmission occasions among the first transmission occasion and the M second transmission occasions; and M offsets, where the M offsets are used to determine M time domain intervals and the M frequency domain intervals.

The M time domain intervals include a time domain interval between the first transmission occasion and a 1st second transmission occasion in the M second transmission occasions and a time domain interval between each of the M second transmission occasions except the 1st second transmission occasion and a previous second transmission occasion, or a time domain interval between each of the M second transmission occasions and the first transmission occasion. The M frequency domain intervals include a frequency domain interval between the first transmission occasion and the 1st second transmission occasion in the M second transmission occasions and a frequency domain interval between each of the M second transmission occasions except the 1st second transmission occasion and a previous second transmission occasion, or a frequency domain interval between each of the M second transmission occasions and the first transmission occasion, or a frequency domain interval between each of the M second transmission occasions and a reference point.

In a possible design, the first offset satisfies the following formula:

$$\text{offset} = \text{symbol\_offset} + \text{frequency\_offset} * \text{MAX\_SYMBOL\_OFFSET}$$

Herein, offset is the first offset, symbol_offset is the first time domain interval, frequency _offset is the second frequency domain interval, and MAX_SYMBOL_OFFSET is a sum of 1 and a maximum value of symbol _offset.

According to a second aspect, an embodiment of this application provides a communication method. The method may be applied to an access network device or a module in an access network device. For example, the method is applied to an access network device. The access network device determines first configuration information and second configuration information. The first configuration information is used to configure a first transmission occasion corresponding to a first SSB, the second configuration information is used to configure M second transmission occasions corresponding to the first transmission occasion, and the M second transmission occasions and the first transmission occasion correspond to a same SSB. The access network device sends the first configuration information and the second configuration information.

In a possible design, the second configuration information includes at least one of the following: a value of M; first information, where the first information is used to determine time domain positions of the M second transmission occasions; and second information, where the second information is used to determine frequency domain positions of the M second transmission occasions.

In a possible design, the first information includes: a first time domain interval, where the first time domain interval is a time domain interval between any adjacent transmission occasions among the first transmission occasion and the M second transmission occasions; or M time domain intervals, where the M time domain intervals include a time domain interval between the first transmission occasion and a 1st second transmission occasion in the M second transmission occasions, and a time domain interval between each of the M second transmission occasions except the 1st second transmission occasion and a previous second transmission occasion, or a time domain interval between each of the M second transmission occasions and the first transmission occasion.

In a possible design, the second information includes: a first frequency domain interval, where the first frequency domain interval is a frequency domain interval between any adjacent transmission occasions among the first transmission occasion and the M second transmission occasions; or M frequency domain intervals, where the M frequency domain intervals include a frequency domain interval between the first transmission occasion and the 1st second transmission occasion in the M second transmission occasions, and a frequency domain interval between each of the M second transmission occasions except the 1st second transmission occasion and a previous second transmission occasion, or a frequency domain interval between each of the M second transmission occasions and the first transmission occasion, or a frequency domain interval between each of the M second transmission occasions and a reference point.

In a possible design, the M second transmission occasions respectively belong to M sets of transmission occasions. The first information includes time domain position information corresponding to each of the M sets of transmission occasions. The second information includes frequency domain position information corresponding to each of the M sets of transmission occasions.

In a possible design, the second configuration information includes at least one of the following: a value of M; a first offset, where the first offset is used to determine a first time domain interval and a first frequency domain interval, the first time domain interval is a time domain interval between any adjacent transmission occasions among the first transmission occasion and the M second transmission occasions, and the first frequency domain interval is a frequency domain interval between any adjacent transmission occasions among the first transmission occasion and the M second transmission occasions; and M offsets, where the M offsets are used to determine M time domain intervals and the M frequency domain intervals.

The M time domain intervals include a time domain interval between the first transmission occasion and a 1st second transmission occasion in the M second transmission occasions and a time domain interval between each of the M second transmission occasions except the 1st second transmission occasion and a previous second transmission occasion, or a time domain interval between each of the M second transmission occasions and the first transmission occasion. The M frequency domain intervals include a frequency domain interval between the first transmission occasion and the 1st second transmission occasion in the M second transmission occasions and a frequency domain interval between each of the M second transmission occasions except the 1st second transmission occasion and a previous second transmission occasion, or a frequency domain interval between each of the M second transmission occasions and the first transmission occasion, or a frequency domain interval between each of the M second transmission occasions and a reference point.

In a possible design, the first offset satisfies the following formula:

$$offset=symbol\_offset+frequency\_offset*MAX\_SYMBOL\_OFFSET$$

Herein, offset is the first offset, symbol_offset is the first time domain interval, frequency _offset is the second frequency domain interval, and MAX_SYMBOL_OFFSET is a sum of 1 and a maximum value of symbol_offset.

According to a third aspect, this application provides a communication apparatus. The communication apparatus has a function for implementing the first aspect. For example, the communication apparatus includes a corresponding module, unit, or means (means) for performing an operation in the first aspect. The module, unit, or means may be implemented by software, or implemented by hardware, or implemented by hardware executing corresponding software.

In a possible design, the communication apparatus includes a processing unit and a communication unit. The communication unit may be configured to receive and send signals, to implement communication between the communication apparatus and another apparatus. The processing unit may be configured to perform some internal operations of the communication apparatus. Functions performed by the processing unit and the communication unit may correspond to the operations in the first aspect.

In a possible design, the communication apparatus includes a processor, and the processor may be configured to be coupled to a memory. The memory may store a necessary computer program or necessary instructions for implementing the functions in the first aspect. The processor may execute the computer program or instructions stored in the memory. When the computer program or instructions are executed, the communication apparatus is enabled to implement the method in any possible design or implementation of the first aspect.

In a possible design, the communication apparatus includes a processor and a memory. The memory may store a necessary computer program or necessary instructions for implementing the functions in the first aspect. The processor may execute the computer program or instructions stored in the memory. When the computer program or instructions are executed, the communication apparatus is enabled to implement the method in any possible design or implementation of the first aspect.

In a possible design, the communication apparatus includes a processor and an interface circuit, and the processor is configured to: communicate with another apparatus through the interface circuit, and perform the method in any possible design or implementation of the first aspect.

According to a fourth aspect, this application provides a communication apparatus. The communication apparatus has a function for implementing the second aspect. For example, the communication apparatus includes a corresponding module, unit, or means for performing an operation in the second aspect, and the function, unit, or means may be implemented by software, or implemented by hardware, or implemented by hardware executing corresponding software.

In a possible design, the communication apparatus includes a processing unit and a communication unit. The communication unit may be configured to receive and receive signals, to implement communication between the communication apparatus and another apparatus. For example, the communication unit is configured to send system information to a terminal device. The processing unit may be configured to perform some internal operations of the communication apparatus. Functions performed by the processing unit and the communication unit may correspond to the operations in the second aspect.

In a possible design, the communication apparatus includes a processor, and the processor may be configured to be coupled to a memory. The memory may store a necessary computer program or necessary instructions for implementing the functions in the second aspect. The processor may execute the computer program or instructions stored in the memory. When the computer program or instructions are executed, the communication apparatus is enabled to implement the method in any possible design or implementation of the second aspect.

In a possible design, the communication apparatus includes a processor and a memory. The memory may store a necessary computer program or necessary instructions for implementing the functions in the second aspect. The processor may execute the computer program or instructions stored in the memory. When the computer program or instructions are executed, the communication apparatus is enabled to implement the method in any possible design or implementation of the second aspect.

In a possible design, the communication apparatus includes a processor and an interface circuit, and the processor is configured to: communicate with another apparatus through the interface circuit, and perform the method in any possible design or implementation of the second aspect.

It may be understood that in the seventh aspect or the eighth aspect, the processor may be implemented by hardware or implemented by software. When the processor is implemented by hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fifth aspect, this application provides a communication system. The communication system may include the communication apparatus according to the third aspect and the communication apparatus according to the fourth aspect.

According to a sixth aspect, this application provides a computer-readable storage medium. The computer storage medium stores computer-readable instructions. When a computer reads and executes the computer-readable instructions, the computer is enabled to perform the method in any possible design of the first aspect or the second aspect.

According to a seventh aspect, this application provides a computer program product. When a computer reads and executes the computer program product, the computer is enabled to perform the method in any possible design of the first aspect or the second aspect.

According to an eighth aspect, this application provides a chip. The chip includes a processor. The processor is coupled to a memory to read and execute a software program stored in the memory, to implement the method in any possible design of the first aspect or the second aspect.

These aspects or another aspect of this application is clearer and more comprehensible in descriptions of the following embodiments.

## BRIEF DESCRIPTION OF DRAWINGS

FIG. 1 is a diagram of a communication system to which an embodiment of this application is applicable;
FIG. 2 is a diagram of a random access process according to an embodiment of this application;
FIG. 3 is a schematic flowchart corresponding to a communication method according to an embodiment of this application;
FIG. 4 is a diagram of a time domain interval and a frequency domain interval according to an embodiment of this application;
FIG. 5A and FIG. 5B are diagrams of transmission occasions according to an embodiment of this application;
FIG. 6 is a diagram of a transmission occasion according to an embodiment of this application;
FIG. 7 is a schematic flowchart corresponding to a communication method according to an embodiment of this application;
FIG. 8 is a diagram of a transmission occasion according to an embodiment of this application;
FIG. 9 is a schematic flowchart corresponding to a communication method according to an embodiment of this application;
FIG. 10 is a schematic flowchart corresponding to a communication method according to an embodiment of this application;

FIG. 11 is a block diagram of a possible example of an apparatus according to an embodiment of this application;
FIG. 12 is a diagram of a structure of a terminal device according to an embodiment of this application; and
FIG. 13 is a diagram of a structure of an access network device according to an embodiment of this application.

## DESCRIPTION OF EMBODIMENTS

The following describes the technical solutions in embodiments of this application with reference to the accompanying drawings in embodiments of this application.

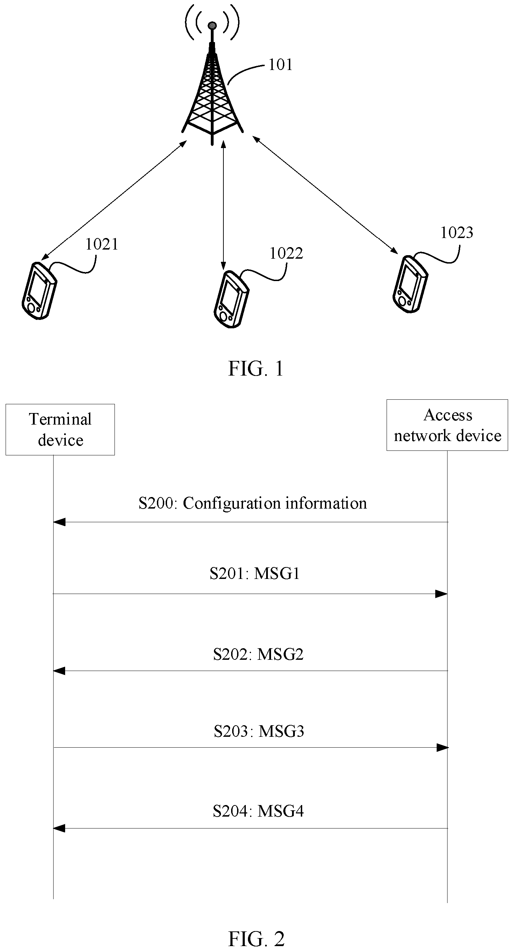

FIG. 1 is a diagram of a communication system to which an embodiment of this application is applicable. As shown in FIG. 1, the communication system may include one or more access network devices (for example, an access network device 101) and one or more terminal devices (for example, a terminal device 1021, a terminal device 1022, and a terminal device 1023). The access network device 101 may communicate with the terminal device 1021, the terminal device 1022, or the terminal device 1023 by using an air interface resource. Optionally, different terminal devices may communicate with each other by using a sidelink (sidelink, SL) resource.

A quantity of access network devices and a quantity of terminal devices included in the communication system are not limited in embodiments of this application. In addition to the access network device and the terminal device, the communication system may further include another device or network element such as a core network device. This is not limited in embodiments of this application either.

The terminal device in embodiments of this application may also be referred to as user equipment (user equipment, UE), a mobile station (mobile station, MS), a mobile terminal (mobile terminal, MT), or the like, and is a device that provides voice and/or data connectivity for a user, for example, a handheld device or a vehicle-mounted device having a wireless connection function. Currently, examples of some terminal devices are: a mobile phone, a tablet computer, a notebook computer, a palmtop computer, a mobile internet device (mobile internet device, MID), a wearable device, a virtual reality (virtual reality, VR) device, and an augmented reality (augmented reality, AR) device, a wireless terminal in industrial control, a wireless terminal in unmanned driving, a wireless terminal in remote surgery, a wireless terminal in a smart grid, a wireless terminal in transportation safety, a wireless terminal in a smart city, a wireless terminal in a smart home, and the like. In embodiments of this application, an apparatus configured to implement the function of the terminal device may be a terminal device, or may be an apparatus, for example, a chip system, that can support the terminal device in implementing the function. The apparatus may be installed in the terminal device. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is the terminal device.

The access network device in embodiments of this application may be a base station (base station, BS), and the BS may be a device that is deployed in a radio access network and that can perform wireless communication with the terminal. The base station may be in a plurality of forms such as a macro base station, a micro base station, a relay station, and an access point. For example, the access network device in embodiments of this application may be a next-generation NodeB (next-generation NodeB, gNB), a transmission reception point (transmission reception point, TRP), an evolved NodeB (evolved NodeB, eNB), or the like. In addition, in a network structure, the access network device may include a central unit (central unit, CU) node and a distributed unit (distributed unit, DU) node. The CU implements some functions of the access network device, and the DU implements some functions of the access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. In embodiments of this application, an apparatus configured to implement the function of the access network device may be the access network device, or may be an apparatus that can support the access network device in implementing the function, for example, a chip system. The apparatus may be installed in the access network device. In the technical solutions provided in embodiments of this application, the technical solutions provided in embodiments of this application are described by using an example in which the apparatus configured to implement the function of the access network device is the access network device and the access network device is a base station.

It may be understood that the communication system shown in FIG. 1 may support various radio access technologies (radio access technologies, RATs). For example, the communication system shown in FIG. 1 may be a 4th generation (4th generation, 4G) communication system (which may also be referred to as a long term evolution (long term evolution, LTE) communication system), a 5G communication system (which may also be referred to as a new radio (new radio, NR) communication system), or a future-oriented evolved system. The communication system and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the communication system evolves and a new service scenario emerges.

The following first describes related technical features in embodiments of this application. It should be noted that these explanations are intended to make embodiments of this application easier to understand, but should not be considered as a limitation on the protection scope claimed in this application.

## 1. Beam

In the 5G communication system, a high carrier frequency (for example, greater than or equal to 6 GHz) is used, for example, a 28 GHz frequency band, a 38 GHz frequency band, or a 72 GHz frequency band, to implement wireless communication with a high bandwidth and a high transmission rate. However, if a higher carrier frequency is used, a radio signal transmitted by the 5G communication system fades more severely in a spatial propagation process, and the radio signal can be even hardly detected at a receiving end. Therefore, in the 5G communication system, a beamforming (beamforming, BF) technology is used to obtain a beam with good directivity, so as to increase an antenna gain and increase power in a transmitting direction. It may be understood that, on a carrier frequency less than 6 GHz, the beamforming technology may also be used to improve a spatial reuse rate of a spectrum.

There may be a correspondence between a beam and a synchronization signal broadcast channel block (synchronous signal/physical broadcast channel block, SS/PBCH block, which may also be referred to as SSB for short). The "correspondence" may also be replaced with "mapping" or "association". For example, a beam 0 corresponds to an SSB #0, a beam 1 corresponds to an SSB #1, and a beam 2 corresponds to an SSB #2. In other words, the access network device may send the SSB #0 over the beam 0, send the SSB #1 over the beam 1, and send the SSB #2 over the beam 2.

## 2. Synchronization burst set

The access network device usually needs to send a plurality of SSBs in one cell to complete one time of beam scanning. A set of SSBs required for completing one time of beam scanning may be referred to as a synchronization burst set (synchronization signal burst set, SS burst set). For example, one SS burst set may include 4, 8, or 64 SSBs. A period of the SS burst set is equivalent to a period of an SSB corresponding to a specific beam, and may be configured as 5 ms (milliseconds), 10 ms, 20 ms, 40 ms, 80 ms, 160 ms, or the like.

## 3. Random access process

In the communication system shown in FIG. 1, the terminal device may attempt to access a network by sending a random access signal to the access network device. The random access signal may be a preamble.

The random access process may be classified into a contention-based random access process and a contention-free random access process based on whether the preamble sent by the terminal device is selected by the terminal device. The following describes a possible implementation of the random access process by using the contention-based random access process as an example.

FIG. 2 is a diagram of a random access process according to an embodiment of this application. As shown in FIG. 2, the following steps are included.

S200: An access network device sends configuration information to a terminal device. Correspondingly, the terminal device may receive the configuration information from the access network device. This step may be used to make preparations before a random access process is executed, and does not belong to steps included in the random access process.

For example, the access network device may send the configuration information to the terminal device by using a system message. The configuration information may be used to configure a plurality of transmission occasions. One transmission occasion is used to transmit a preamble once. The transmission occasion in this embodiment of this application may also be referred to as a physical random access channel (physical random access channel, PRACH) transmission occasion or a PRACH occasion (occasion). This is not specifically limited.

In a possible implementation, the configuration information may include time domain position information of the plurality of transmission occasions and frequency domain position information of the plurality of transmission occasions. The time domain position information of the plurality of transmission occasions indicates time domain positions of the plurality of transmission occasions. For example, the time domain position information of the plurality of transmission occasions may include a prach-ConfigurationIndex parameter in a RACH-ConfigGeneric information element in the system message. The frequency domain position information of the plurality of transmission occasions indicates frequency domain positions of the plurality of transmission occasions. For example, the frequency domain position information of the plurality of transmission occasions may include a msg1-FDM parameter and a msg1-FrequencyStart parameter in the system message. The msg1-FDM parameter indicates a quantity of frequency division multiplexing transmission occasions in one time domain transmission occasion, and msg1-FrequencyStart indicates a frequency domain interval between a reference point and a transmission occasion with a lowest frequency domain position. The reference point may be a PRB 0 or another possible frequency domain position. This is not specifically limited.

In addition, the configuration information may further include other possible information, for example, information about a correspondence between each of the plurality of transmission occasions and an SSB, information about a correspondence between an SSB and a preamble, and a threshold 1. The information about the correspondence between each of the plurality of transmission occasions and the SSB may include an ssb-perRACH-Occasion parameter in the system message. The ssb-perRACH-Occasion parameter indicates a quantity of SSBs corresponding to each transmission occasion. The information about the correspondence between the SSB and the preamble may include a CB-PremablesPerSSB parameter in the system message. The CB-PremablesPerSSB parameter indicates a quantity of preambles corresponding to each SSB on a corresponding transmission occasion. The threshold 1 is used by the terminal device to select an appropriate SSB. The threshold 1 may be a reference signal received power (reference signal received power, RSRP) threshold or a reference signal received quality (reference signal received quality, RSRQ) threshold. In this embodiment of this application, an example in which the threshold 1 (and thresholds described below) is the RSRP threshold is used for description.

S201: The terminal device sends a random access request to the access network device. The random access request may include a preamble. The random access request may be referred to as a first message or a message 1 (Msg1) in the random access process.

Specifically, the terminal device may receive a plurality of SSBs sent by the access network device, and select a target SSB from the plurality of SSBs based on measurement values (for example, RSRPs of the plurality of SSBs) of the plurality of SSBs and the threshold 1. A measurement value of the target SSB is greater than or equal to the threshold 1. Further, the terminal device may send, on one transmission occasion corresponding to the target SSB, a preamble corresponding to the target SSB.

S202: After detecting the preamble sent by the terminal device, the access network device sends a random access response (random access response, RAR) to the terminal device. The random access response may be referred to as a second message or a message 2 (Msg2) in the random access process.

Specifically, after detecting the preamble corresponding to the target SSB on the transmission occasion corresponding to the target SSB, the access network device may determine that a downlink beam used for communication with the terminal device is a beam corresponding to the target SSB, and further send the RAR to the terminal device over the beam corresponding to the target SSB.

S203: The terminal device sends uplink signaling to the access network device. The uplink signaling may be referred to as a third message or a message 3 (Msg3) in the random access process.

S204: The access network device sends a contention resolution message to the terminal device. Correspondingly, the terminal device may receive the contention resolution message from the access network device. If determining, based on the contention resolution message, that the terminal device wins a current random access conflict, the terminal device may determine that random access succeeds. Otherwise, the terminal device determines that current random access fails. The contention resolution message may be referred to as a fourth message or a message 4 (Msg4) in the random access process.

It may be understood that the random access process shown in FIG. 2 may be referred to as a four-step random access process. In another possible example, the random access process may alternatively be a two-step random access process. The two-step random access process may include MsgA and MsgB. Herein, MsgA includes a random access preamble and uplink signaling, and is equivalent to Msg1 and Msg3 in the foregoing four-step random access process; and MsgB may be response information for MsgA, and MsgB may include at least one of response information for the random access preamble and response information for the uplink signaling.

As described above, a carrier frequency of the 5G communication system is high, and a path loss of a radio channel is large. Therefore, in a random access process, after the terminal device sends a preamble on one transmission occasion, a case in which the access network device fails to receive the preamble sent by the terminal device may occur due to the large path loss, resulting in a random access failure.

Based on this, embodiments of this application provide a communication method, to implement preamble retransmission, so as to increase a probability that an access network device successfully receives a preamble and increase a random access success probability of a terminal device.

The following describes in detail, with reference to Embodiment 1 and Embodiment 2, the communication method provided in embodiments of this application.

**Embodiment 1**

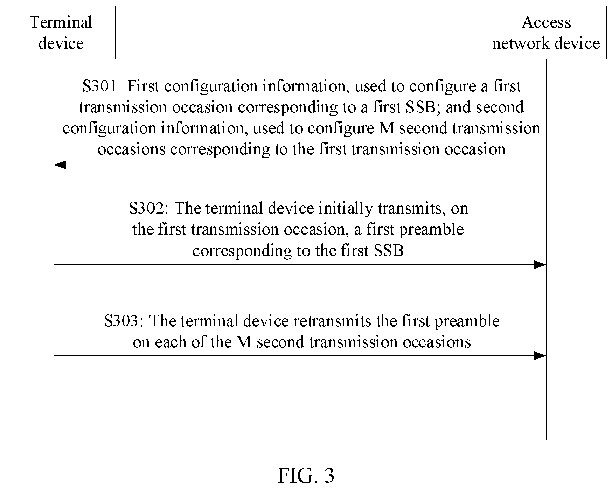

FIG. 3 is a schematic flowchart corresponding to a communication method according to Embodiment 1 of this application. As shown in FIG. 3, the method may include the following steps.

S301: An access network device sends first configuration information and second configuration information. Correspondingly, a terminal device receives the first configuration information and the second configuration information from the access network device.

Herein, the first configuration information is used to configure a plurality of first-type transmission occasions, and the second configuration information is used to configure second-type transmission occasions corresponding to the plurality of first-type transmission occasions. The first-type transmission occasion is used for initial transmission of a preamble, and the second-type transmission occasion is used for preamble retransmission. The first-type transmission occasion and the second-type transmission occasion corresponding to the first-type transmission occasion correspond to a same SSB. For example, the plurality of first-type transmission occasions include a first transmission occasion, a second-type transmission occasion corresponding to the first transmission occasion includes M second transmission occasions, and the first transmission occasion and the M second transmission occasions correspond to a same SSB, where M is a positive integer.

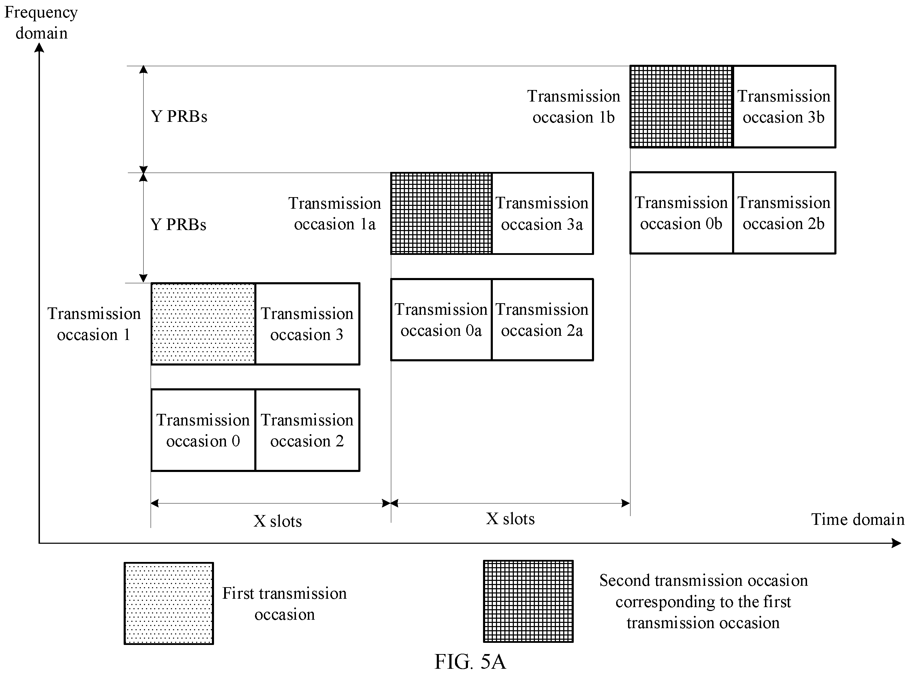

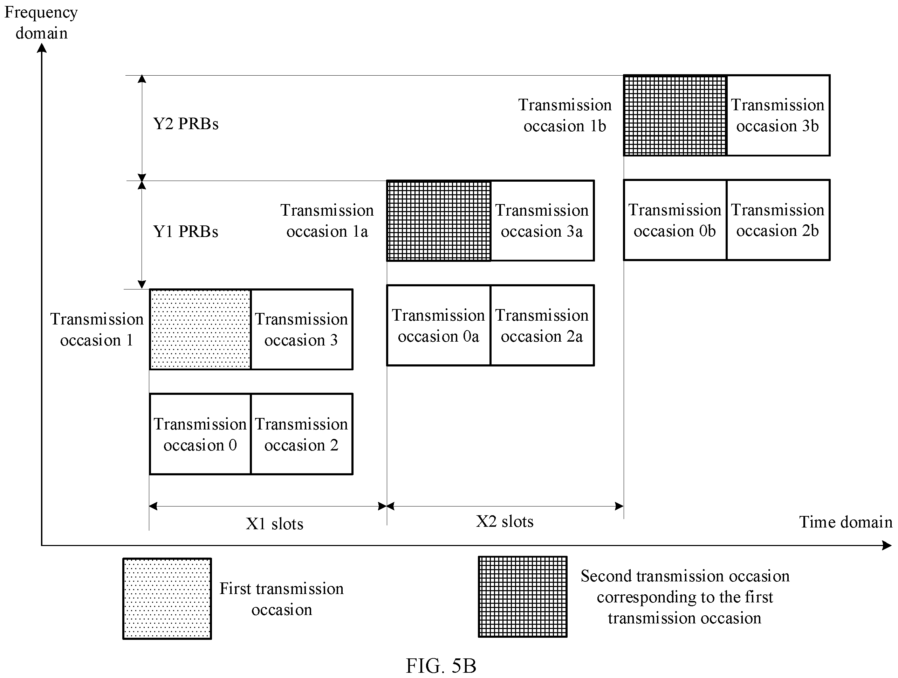

There may be a plurality of manners of configuring the plurality of first-type transmission occasions by using the first configuration information. In a possible implementation, the first configuration information may include time domain position information of the plurality of first-type transmission occasions and frequency domain position information of the plurality of first-type transmission occasions. The plurality of first-type transmission occasions may be transmission occasions that appear periodically. The period may be referred to as a random access period. In addition, the first configuration information may further include other possible information, for example, information about a correspondence between each of the plurality of first-type transmission occasions and an SSB, information about a correspondence between an SSB and a preamble, and a threshold 1. For the first configuration information, refer to the descriptions related to the configuration information in FIG. 2. For example, as shown in FIG. 5A or FIG. 5B, the plurality of first-type transmission occasions configured by using the first configuration information may include a transmission occasion 0, a transmission occasion 1, a transmission occasion 2, and a transmission occasion 3. The transmission occasion 0, the transmission occasion 1, the transmission occasion 2, and the transmission occasion 3 shown in FIG. 5A or FIG. 5B may indicate first-type transmission occasions in one random access period.

There may be a plurality of manners of configuring the plurality of first-type transmission occasions by using the second configuration information, for example, Implementation 1 to Implementation 3.

(1) Implementation 1

The second configuration information may include at least one of the following: ① a value of M; ② first information, where the first information is used to determine time domain positions of the M second transmission occasions; and ③ second information, where the second information is used to determine frequency domain positions of the M second transmission occasions.

For the first information:

In a possible implementation, the first information may include a first time domain interval (for example, denoted as timeOffset), and the first time domain interval is a time domain interval between any adjacent transmission occasions among the first transmission occasion and the M second transmission occasions. In this case, time domain intervals between any adjacent transmission occasions among the first transmission occasion and the M second transmission occasions are the same.

In another possible implementation, the first information may include a time domain interval list (for example, denoted as timeOffset-List), and the time domain interval list includes M time domain intervals, for example, a time domain interval 1, a time domain interval 2, ..., and a time domain interval M. The M time domain intervals include a time domain interval between the first transmission occasion and a 1st second transmission occasion in the M second transmission occasions and a time domain interval between each of the M second transmission occasions except the 1st second transmission occasion and a previous second transmission occasion. For example, the time domain interval 1 is a time domain interval between the first transmission occasion and the 1st second transmission occasion in the M second transmission occasions, the time domain interval 2 is a time domain interval between a 2nd second transmission occasion and the 1st second transmission occasion in the M second transmission occasions, and so on. Alternatively, the M time domain intervals include a time domain interval between the first transmission occasion and each of the M second transmission occasions. For example, the time domain interval 1 is a time domain interval between the first transmission occasion and a 1st second transmission occasion in the M second transmission occasions, the time domain interval 2 is a time domain interval between the first transmission occasion and a 2nd second transmission occasion in the M second transmission occasions, and so on. It may be understood that any two of the M time domain intervals may be the same or may be different. When the first information includes the time domain interval list, because a quantity of time domain intervals included in the time domain interval list may implicitly indicate the value of M, in this case, the second configuration information may not include the value of M.

In another possible example, the first time domain interval or the M time domain intervals may be predefined in a protocol. In this case, the second configuration information may not include the first information.

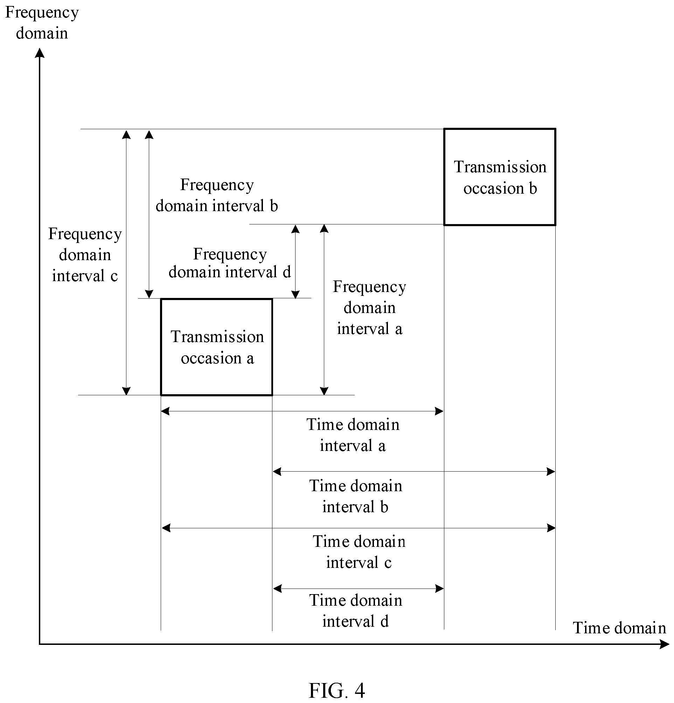

Herein, the foregoing time domain interval is explained as follows: A transmission occasion a and a transmission occasion b are used as an example. The transmission occasion a and the transmission occasion b may be adjacent transmission occasions, or may be non-adjacent transmission occasions. As shown in FIG. 4, a time domain interval between the transmission occasion a and the transmission occasion b may be a time domain interval a between a time domain start position of the transmission occasion a and a time domain start position of the transmission occasion b, or may be a time domain interval b between a time domain end position of the transmission occasion a and a time domain end position of the transmission occasion b, or may be a time domain interval c between the time domain start position of the transmission occasion a and the time domain end position of the transmission occasion b, or may be a time domain interval d between the time domain end position of the transmission occasion a and the time domain start position of the transmission occasion b. The time domain interval may be expressed in a form of a symbol, a slot, a subframe, a radio frame, a millisecond, or the like. This is not specifically limited.

For the second information:

In a possible implementation, the second information may include a first frequency domain interval (for example, denoted as frequencyOffset), and the first frequency domain interval is a frequency domain interval between any adjacent transmission occasions among the first transmission occasion and the M second transmission occasions. In this case, frequency domain intervals between any adjacent transmission occasions among the first transmission occasion and the M second transmission occasions are the same.

In another possible implementation, the second information may include a frequency domain interval list (for example, denoted as frequencyOffset-List), and the frequency domain interval list includes M frequency domain intervals, for example, a frequency domain interval 1, a frequency domain interval 2, ..., and a frequency domain interval M. The M frequency domain intervals include a frequency domain interval between the first transmission occasion and the 1st second transmission occasion in the M second transmission occasions and a frequency domain interval between each of the M second transmission occasions except the 1st second transmission occasion and a previous second transmission occasion. For example, the frequency domain interval 1 is a frequency domain interval between the first transmission occasion and the 1st second transmission occasion in the M second transmission occasions, the frequency domain interval 2 is a frequency domain interval between the 2nd second transmission occasion and the 1st second transmission occasion in the M second transmission occasions, and so on. Alternatively, the M frequency domain intervals include a frequency domain interval between the first transmission occasion and each of the M second transmission occasions. Alternatively, the M frequency domain intervals include a frequency domain interval between each of the M second transmission occasions and a reference point. It may be understood that any two of the M frequency domain intervals may be the same or may be different. When the second information includes the frequency domain interval list, because a quantity of frequency domain intervals included in the frequency domain interval list may implicitly indicate the value of M, in this case, the second configuration information may not include the value of M.

In another possible example, the first frequency domain interval or the M frequency domain intervals may be predefined in a protocol, or the frequency domain positions of the M second transmission occasions may be predefined in a protocol. In this case, the second configuration information may not include the second information.

Herein, the foregoing frequency domain interval is explained as follows: The transmission occasion a and the transmission occasion b are still used as an example. As shown in FIG. 4, a frequency domain interval between the transmission occasion a and the transmission occasion b may be a frequency domain interval a between a frequency domain start position of the transmission occasion a and a frequency domain start position of the transmission occasion b, or may be a frequency domain interval b between a frequency domain end position of the transmission occasion a and a frequency domain end position of the transmission occasion b, or may be a frequency domain interval c between the frequency domain start position of the transmission occasion a and the frequency domain end position of the transmission occasion b, or may be a frequency domain interval d between the frequency domain end position of the transmission occasion a and the frequency domain start position of the transmission occasion b. The transmission occasion a is used as an example. A frequency domain interval between the transmission occasion a and the reference point may be a frequency domain interval between the frequency domain start position of the transmission occasion a and the reference point, or may be a frequency domain interval between the frequency domain end position of the transmission occasion a and the reference point. The "frequency domain start position" and the "frequency domain end position" in this embodiment of this application may be determined in an order from a low frequency to a high frequency. The frequency domain interval may be expressed in a form of a subcarrier or a PRB. This is not specifically limited.

Based on the foregoing descriptions, the following describes several possible cases of the second configuration information with reference to Example 1 to Example 4.

Example 1: The second configuration information may include the value (for example, 2) of M, the first time domain interval, and the first frequency domain interval. For example, the first time domain interval is X slots, and the first frequency domain interval is YPRBs. In this case, as shown in FIG. 5A, if the first transmission occasion is the transmission occasion 1 corresponding to an SSB 1, two second transmission occasions corresponding to the first transmission occasion are respectively a transmission occasion 1a and a transmission occasion 1b. A time domain interval between the transmission occasion 1a and the transmission occasion 1 is X slots, and a time domain interval between the transmission occasion 1b and the transmission occasion 1a is X slots. A frequency domain interval between the transmission occasion 1a and the transmission occasion 1 is Y PRBs, and a frequency domain interval between the transmission occasion 1b and the transmission occasion 1a is Y PRBs.

Example 2: The second configuration information may include the value of M, the time domain interval list, and the frequency domain interval list. For example, the time domain interval list includes {X1 slots, X2 slots}, and the frequency domain interval list includes {Y1 PRBs, Y2 PRBs}. In this case, as shown in FIG. 5B, if the first transmission occasion is the transmission occasion 1 corresponding to the SSB 1, the two second transmission occasions corresponding to the first transmission occasion are respectively the transmission occasion 1a and the transmission occasion 1b. The time domain interval between the transmission occasion 1a and the transmission occasion 1 is X1 slots, and the time domain interval between the transmission occasion 1b and the transmission occasion 1a is X2 slots. The frequency domain interval between the transmission occasion 1a and the transmission occasion 1 is Y1 PRBs, and the frequency domain interval between the transmission occasion 1b and the transmission occasion 1a is Y2 PRBs.

Example 3: The second configuration information includes the value of M, the first time domain interval, and the frequency domain interval list. For example, the first time domain interval is X slots, and the frequency domain interval list includes {Y1 PRBs, Y2 PRBs}.

Example 4: The second configuration information includes the value of M, the time domain interval list, and the first frequency domain interval. For example, the time domain interval list includes {X1 slots, X2 slots}, and the first frequency domain interval is Y PRBs.

(2) Implementation 2

The second configuration information may include at least one of the following: (1) the value of M; (2) a first offset; and (3) M offsets. For example, the second configuration information may include the value of M and the first offset, or the second configuration information may include the M offsets. The first offset is used to determine the first time domain interval and the first frequency domain interval. The M offsets are used to determine the M time domain intervals and the M frequency domain intervals. For example, if the M offsets include an offset 1, an offset 2, ..., and an offset M, the offset 1 is used to determine the time domain interval 1 and the frequency domain interval 2, the offset 2 is used to determine the time domain interval 2 and the frequency domain interval 2, and so on. For the first time domain interval, the first frequency domain interval, the M time domain intervals, and the M frequency domain intervals, refer to the descriptions in Implementation 1.

The first offset is used as an example, and the first offset may satisfy the following formula:

$$offset = symbol\_offset + frequency\_offset * MAX\_SYMBOL\_OFFSET.$$

Herein, offset is the first offset, symbol_offset is the first time domain interval, frequency _offset is the first frequency domain interval, and MAX_SYMBOL_OFFSET is a sum of 1 and a maximum value of symbol_offset.

It may be understood that, in another possible case, if the first time domain interval is represented in a form of P slots plus Q symbols, offset=Q+P*14+frequency_offset*MAX_SLOT_OFFSET. In addition, the foregoing formula is merely a possible example. This is not limited in this embodiment of this application.

(3) Implementation 3

The second configuration information may be used to configure M sets of transmission occasions, and the M second transmission occasions respectively belong to the M sets of transmission occasions. In a possible implementation, the second configuration information may include time domain position information corresponding to each of the M sets of transmission occasions and/or frequency domain position information corresponding to each of the M sets of transmission occasions.

The time domain position information corresponding to each of the M sets of transmission occasions may include a prach-ConfigurationIndex parameter 1, a prach-ConfigurationIndex parameter 2, ..., and a prach-ConfigurationIndex parameter M. A random access period corresponding to any one of the M sets of transmission occasions may be the same as a random access period configured by using the first configuration information. The frequency domain position information corresponding to each of the M sets of transmission occasions includes {msg1-FDM parameter 1, msg1-FrequencyStart parameter 1}, {msg1-FDM parameter 2, msg1-FrequencyStart parameter 2}, ..., and {msg1-FDM parameter M, msg1-FrequencyStart parameter M}. The prach-ConfigurationIndex parameter 1 and {msg1-FDM parameter 1, msg1-Frequency Start parameter 1} are used to determine a first set of transmission occasions of the M sets of transmission occasions, and the prach-ConfigurationIndex parameter 2 and {msg1-FDM parameter 2, msg1-FrequencyStart parameter 2} are used to determine a second set of transmission occasions of the M sets of transmission occasions, and so on. In another possible example, the frequency domain position information corresponding to each of the M sets of transmission occasions may also include the frequency domain interval list. For the frequency domain interval list, refer to the descriptions in Implementation 1.

For example, a frequency domain position of the second-type transmission occasion corresponding to the first-type transmission occasion may be the same as a frequency domain position of the first-type transmission occasion. In this case, the second configuration information may no longer include the frequency domain position information corresponding to each of the M sets of transmission occasions. For example, the first configuration information includes a prach-ConfigurationIndex parameter 0 and {msg1-FDM parameter 0, msg1-FrequencyStart parameter 0}, and the second configuration information includes the prach-ConfigurationIndex parameter 1, the prach-ConfigurationIndex parameter 2, ..., and the prach-ConfigurationIndex parameter M. The prach-ConfigurationIndex parameter 0 and {msg1-FDM parameter 0, msg1-FrequencyStart parameter 0} are used to determine the first-type transmission occasion; the prach-ConfigurationIndex parameter 1 and {msg1-FDM parameter 0, msg1-FrequencyStart parameter 0} are used to determine the first set of transmission occasions of the M sets of transmission occasions; and the prach-ConfigurationIndex parameter 2 and {msg1-FDM parameter 0, msg1-Frequency Start parameter 0} are used to determine the second set of transmission occasions of the M sets of transmission occasions, and so on.

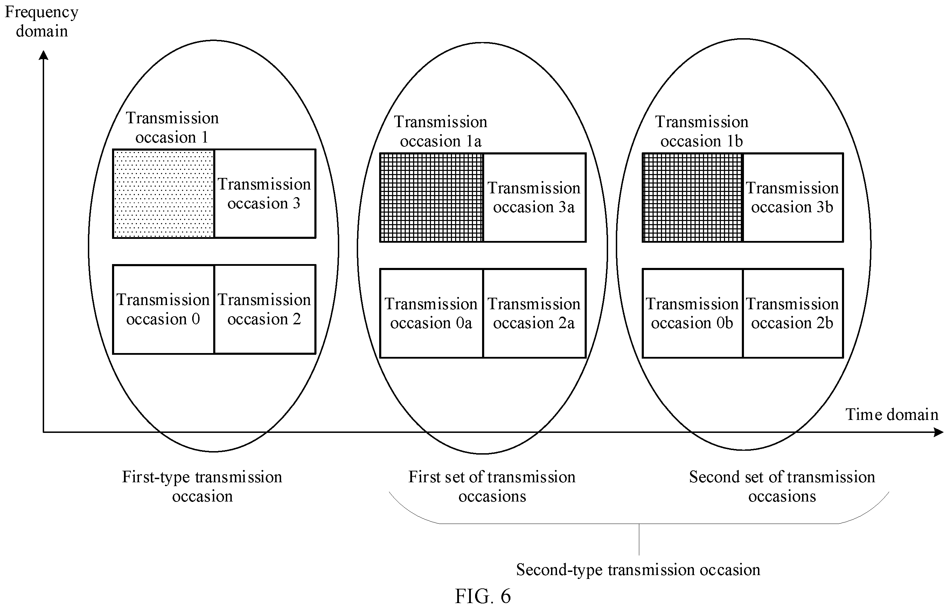

For example, as shown in FIG. 6, the first-type transmission occasion configured by using the first configuration information may include the transmission occasion 0, the transmission occasion 1, the transmission occasion 2, and the transmission occasion 3. The first set of transmission occasions configured by using the second configuration information includes a transmission occasion 0a, the transmission occasion 1a, a transmission occasion 2a, and a transmission occasion 3a. The second set of transmission occasions includes a transmission occasion 0b, the transmission occasion 1b, a transmission occasion 2b, and a transmission occasion 3b. The transmission occasion 0a and the transmission occasion 0b are two second-type transmission occasions corresponding to the transmission occasion 0, the transmission occasion 1a and the transmission occasion 1b are two second-type transmission occasions corresponding to the transmission occasion 1, and so on.

In addition, for Implementation 1 to Implementation 3, the second configuration information may further include other possible information, for example, a threshold 2. The threshold 2 is used by the terminal device to determine whether the preamble needs to be retransmitted. It may be understood that M may be a quantity of retransmission times of the preamble, and the value of M included in the second configuration information may also be replaced with a value of N, where N=M+1, and N may be the quantity of transmission times of the preamble.

For example, the access network device may send a system message. The system message includes the first configuration information and the second configuration information. Some or all information in the first configuration information may be carried in an RACH-ConfigGeneric information element in the system message. Some or all information in the second configuration information may be carried in the RACH-ConfigGeneric information element in the system message, or may be carried in another possible information element. The information element is associated with the RACH-ConfigGeneric information element.

S302: The terminal device initially transmits, on the first transmission occasion, a first preamble corresponding to a first SSB.

Herein, the first transmission occasion may be one of a plurality of transmission occasions corresponding to the first SSB.

S303: The terminal device retransmits the first preamble on each of the M second transmission occasions.

Specifically, the terminal device may determine, based on a measurement value of a first cell and the threshold 2, whether preamble retransmission needs to be performed in the first cell. The measurement value of the first cell may be cell-level RSRP or cell-level RSRQ obtained by the terminal device through measurement in the first cell. If the measurement value of the first cell is greater than the threshold 2, the terminal device determines that preamble retransmission does not need to be performed in the first cell; or if the measurement value of the first cell is less than the threshold 2, the terminal device determines that preamble retransmission needs to be performed in the first cell. For example, after determining that preamble retransmission needs to be performed in the first cell, the terminal device may select the first SSB from a plurality of SSBs based on the threshold 1 and measurement values of the plurality of SSBs of the first cell, and initially transmit the first preamble on the first transmission occasion corresponding to the first SSB. By determining, based on the second configuration information, the M second transmission occasions corresponding to the first transmission occasion, the terminal device then retransmits the first preamble on each of the M second transmission occasions.

In addition, from a perspective of the access network device, in a possible case, if the access network device receives the first preamble on the first transmission occasion, the access network device may determine, based on the first transmission occasion, that a downlink beam used for communicating with the terminal device is a beam corresponding to the first SSB, and perform a subsequent random access process (for example, send an RAR to the terminal device) based on the first preamble. Further, if the access network device receives the first preamble on the M second transmission occasions after sending the RAR, the access network device may determine that the first preamble received in this case is the preamble retransmitted by the terminal device, and then may not need to respond, that is, the RAR is not repeatedly sent. In another possible case, if the access network device does not receive the first preamble on the first transmission occasion, but receives the first preamble on one or some of the M second transmission occasions, because an SSB corresponding to the second transmission occasion is the same as an SSB corresponding to the first transmission occasion, the access network device may determine, based on the second transmission occasion, that a downlink beam used for communicating with the terminal device is a beam corresponding to the first SSB, and perform a subsequent random access process based on the first preamble.

According to the method in Embodiment 1, because the access network device configures the second-type transmission occasion for the terminal device by using the second configuration information, the terminal device can implement preamble retransmission on the second-type transmission occasion, so as to increase a probability that the access network device successfully receives the preamble, and increase a random access success probability of the terminal device.

**Embodiment 2**

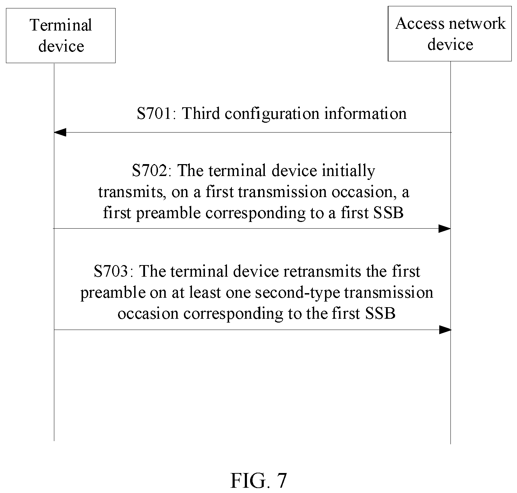

FIG. 7 is a schematic flowchart corresponding to a communication method according to Embodiment 2 of this application. As shown in FIG. 7, the method includes the following steps.

S701: An access network device sends third configuration information to a terminal device. The third configuration information is used to configure a plurality of transmission occasions corresponding to a plurality of SSBs, the plurality of SSBs include a first SSB, and transmission occasions corresponding to the first SSB include a first-type transmission occasion and a second-type transmission occasion.

For example, the plurality of SSBs may include all SSBs actually transmitted by the access network device in one synchronization burst set. For example, one synchronization burst set includes 16 SSBs. If the access network device selects 10 SSBs from the 16 SSBs for transmission, the plurality of SSBs may include the 10 SSBs.

There may be a plurality of manners of configuring the plurality of transmission occasions by using the third configuration information. In a possible implementation, the third configuration information may include time domain position information and frequency domain position information of the plurality of transmission occasions. The plurality of transmission occasions may include transmission occasions that appear in one random access period. Further, the third configuration information may further include indication information. The indication information indicates the first-type transmission occasion in the plurality of transmission occasions. For example, the indication information may indicate a time domain position, and a transmission occasion at the time domain position is the first-type transmission occasion. In this manner, the access network device does not need to configure the second-type transmission occasion for the terminal device by using an additional configuration parameter, thereby effectively reducing signaling overheads.

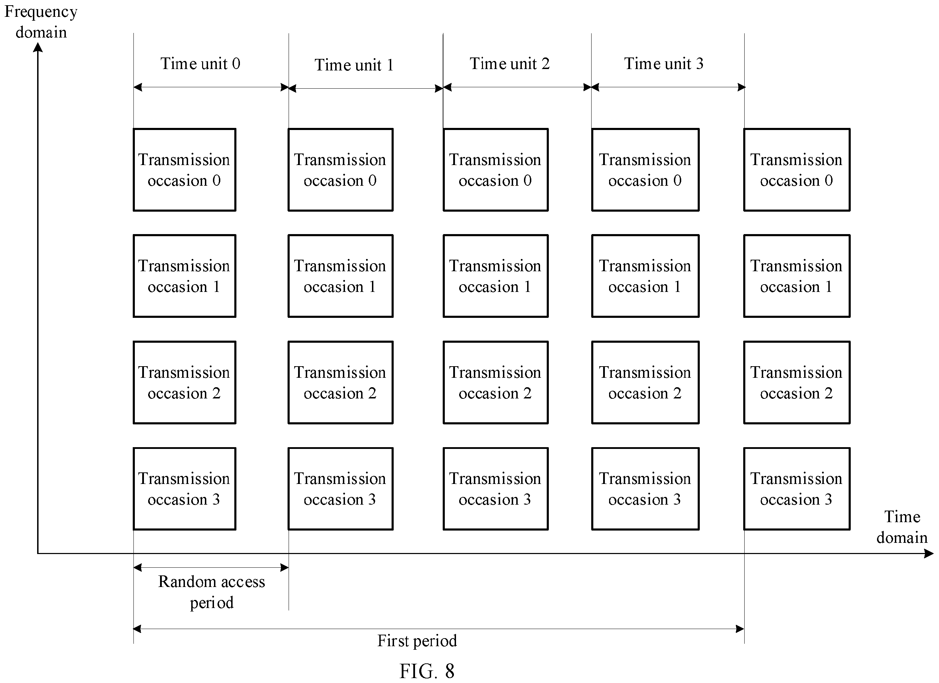

In an example, the indication information may include duration of a first period and an identifier of a time unit in which the first-type transmission occasion is located in the first period. The first period may also be referred to as an association period (association period), the duration of the first period may be 2 to the power of n of duration of the random access period, and n is a positive integer. A transmission occasion in each first period includes at least one transmission occasion corresponding to each of the plurality of SSBs. The first period may include a plurality of time units, and numbers of the plurality of time units are respectively a time unit 0, a time unit 1, ..., and the like. The identifier of the time unit in which the first-type transmission occasion is located may be a number of the time unit in which the first-type transmission occasion is located. For example, as shown in FIG. 8, the duration of the first period is four times the duration of the random access period. The indication information may indicate that a transmission occasion in the time unit 0 in the first period is the first-type transmission occasion, and a transmission occasion in another time unit in the first period is the second-type transmission occasion. The time unit may be a slot or another possible time unit. This is not specifically limited.

In addition, the third configuration information may further include other possible information, for example, information about a correspondence between each of the plurality of transmission occasions and an SSB, information about a correspondence between an SSB and a preamble, a threshold 1, and a threshold 2. For details, refer to the descriptions in Embodiment 1.

For example, the access network device may send the third configuration information to the terminal device by using a system message.

S702: The terminal device initially transmits, on a first transmission occasion, a first preamble corresponding to the first SSB.

Herein, the first transmission occasion may be the first-type transmission occasion corresponding to the first SSB.

S703: The terminal device retransmits the first preamble on at least one second-type transmission occasion corresponding to the first SSB.

For example, as shown in FIG. 8, the first transmission occasion is a transmission occasion 2 in the time unit 0, and the second-type transmission occasion corresponding to the first SSB may include a transmission occasion 2 in the time unit 1, a transmission occasion 2 in the time unit 2, and a transmission occasion 2 in the time unit 3 in the first period. In this case, the terminal device may initially transmit the first preamble on the transmission occasion 2 in the time unit 0 shown in FIG. 8, retransmit the first preamble on each of the transmission occasion 2 in the time unit 1, the transmission occasion 2 in the time unit 2, and the transmission occasion 2 in the time unit 3 in the first period.

It may be understood that the terminal device may retransmit the first preamble on all second-type transmission occasions (that is, the transmission occasion 2 in the time unit 1, the transmission occasion 2 in the time unit 2, and the transmission occasion 2 in the time unit 3 in the first period) corresponding to the first SSB, or the terminal device may flexibly determine a quantity of retransmission times based on other possible information. This is not specifically limited.

A difference between Embodiment 2 and Embodiment 1 lies in that a manner in which the access network device configures the transmission occasion is different. For other content other than the difference, Embodiment 2 and Embodiment 1 may be mutually referenced.

According to the method in Embodiment 2, because the access network device indicates the first-type transmission occasion and the second-type transmission occasion of the plurality of transmission occasions to the terminal device by using the indication information, the terminal device can implement preamble retransmission on the second-type transmission occasion, so as to increase a probability that the access network device successfully receives the preamble, and increase a random access success probability of the terminal device.

Embodiment 1 and Embodiment 2 describe specific implementations of retransmitting the preamble by the terminal device. Further, the terminal device may retransmit a message 3 in the random access process. For example, the access network device may configure, for the terminal device, a transmission occasion used to request retransmission of the message 3. Then, when the terminal device sends a preamble on the transmission occasion, the access network device may configure, for the terminal device, a plurality of physical uplink shared channel (physical uplink shared channel, PUSCH) resources used for retransmission of the message 3.

In this way, when the terminal device supports preamble retransmission, the terminal device may implement preamble retransmission by using the method in Embodiment 1 or Embodiment 2. When the terminal device supports retransmission of the message 3, the terminal device may implement, on the transmission occasion used to request retransmission of the message 3, retransmission of the message 3 by sending the preamble.

Preamble retransmission may depend on retransmission of the message 3. In other words, a terminal device that supports retransmission of the message 3 may support preamble retransmission or not support preamble retransmission, and a terminal device that does not support retransmission of the message 3 definitely does not support preamble retransmission. Alternatively, preamble retransmission may not depend on retransmission of the message 3, that is, preamble retransmission and retransmission of the message 3 are independent of each other. In other words, the terminal device may support both preamble retransmission and retransmission of the message 3, or may support preamble retransmission but not support retransmission of the message 3, or may support retransmission of the message 3 but not support preamble retransmission, or may support neither preamble retransmission or retransmission of the message 3.

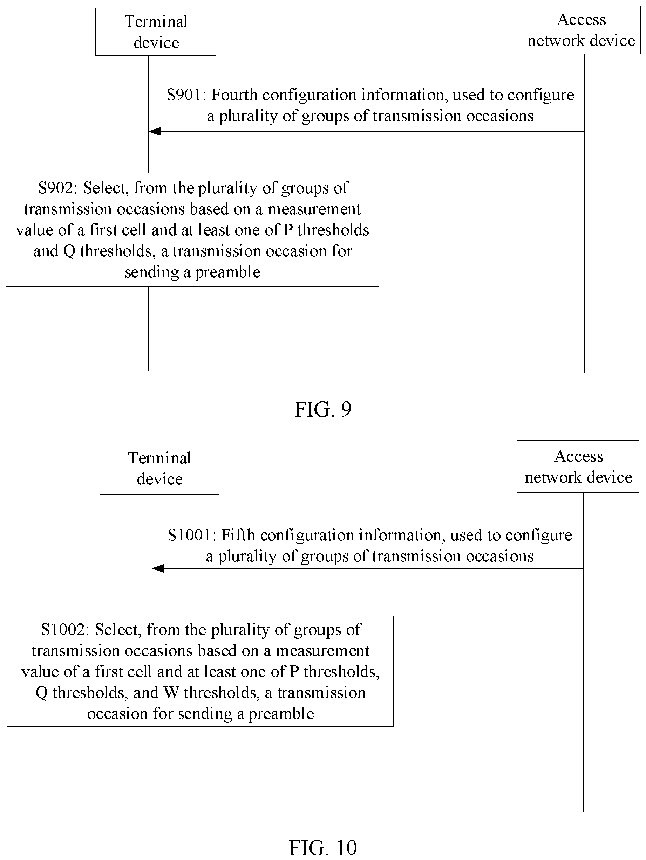

When preamble retransmission depends on retransmission of the message 3, there may be three types of terminal devices in a network. A first-type terminal device is a terminal device that supports both preamble retransmission and retransmission of the message 3. A second-type terminal device is a terminal device that does not support preamble retransmission but supports retransmission of the message 3. A third-type terminal device is a terminal device that supports neither preamble retransmission nor retransmission of the message 3. For this case, the following describes a possible implementation with reference to FIG. 9.

FIG. 9 is a schematic flowchart corresponding to a communication method according to an embodiment of this application. As shown in FIG. 9, the method includes the following steps.

S901: An access network device sends fourth configuration information to a terminal device. Correspondingly, the terminal device receives the fourth configuration information. The fourth configuration information is used to configure a plurality of groups of transmission occasions, and the plurality of groups of transmission occasions include a first group of transmission occasions that supports neither preamble retransmission nor retransmission of the message 3, and further include P groups of transmission occasions that support preamble retransmission and Q groups of transmission occasions that support retransmission of the message 3. The P groups of transmission occasions respectively correspond to P thresholds, the Q groups of transmission occasions respectively correspond to Q thresholds, and both P and Q are positive integers.

For example, the access network device may send the fourth configuration information to the terminal device by using a system message. The fourth configuration information may further include other possible information, for example, a threshold 1. Each of the plurality of groups of transmission occasions may include transmission occasions corresponding to a plurality of SSBs. For example, the plurality of SSBs may include all SSBs actually transmitted by the access network device in one synchronization burst set.

S902: The terminal device selects, from the plurality of groups of transmission occasions based on a measurement value of a first cell and at least one of the P thresholds and the Q thresholds, a transmission occasion for sending a preamble. The terminal device may be a first-type terminal device, and the first cell may be a cell in which the terminal device prepares to initiate random access.

The following describes some possible implementations of S903 with reference to Case a1 to Case a4.

(1) Case a1

The P groups of transmission occasions include a second group of transmission occasions (that is, P=1), and the second group of transmission occasions corresponds to a first threshold.

In this case, when the measurement value of the first cell is less than the first threshold, the terminal device may send the preamble on a plurality of transmission occasions of the second group of transmission occasions. In other words, the terminal device may retransmit the preamble. For example, when the measurement value of the first cell is less than the first threshold, the terminal device may select a first SSB from the plurality of SSBs based on measurement values of the plurality of SSBs of the first cell and the threshold 1, initially transmit a first preamble on a first transmission occasion corresponding to the first SSB of the second group of transmission occasions, and retransmit the first preamble on each of M transmission occasions corresponding to the first transmission occasion. For a specific implementation in which the access network device configures the second group of transmission occasions and a specific implementation in which the terminal device sends the preamble on the plurality of transmission occasions of the second group of transmission occasions, refer to Embodiment 1 or Embodiment 2.

When the measurement value of the first cell is greater than or equal to the first threshold, the terminal device may send the preamble on one of the first group of transmission occasions. In other words, the terminal device does not retransmit the preamble. For example, when the measurement value of the first cell is less than the first threshold, the terminal device may select the first SSB from the plurality of SSBs based on the measurement values of the plurality of SSBs of the first cell and the threshold 1, and send the first preamble on one transmission occasion corresponding to the first SSB of the first group of transmission occasions.

(2) Case a2

The P groups of transmission occasions include the second group of transmission occasions, and the second group of transmission occasions corresponds to the first threshold. The Q groups of transmission occasions include a third group of transmission occasions (that is, Q=1), the third group of transmission occasions corresponds to a second threshold, and the first threshold is less than the second threshold.

In this case, when the measurement value of the first cell is less than the first threshold, the terminal device may send the preamble on the plurality of transmission occasions of the second group of transmission occasions; when the measurement value of the first cell is greater than or equal to the first threshold and less than the second threshold, the terminal device may send the preamble on one of the third group of transmission occasions; or when the measurement value of the first cell is greater than or equal to the second threshold, the terminal device may send the preamble on one of the first group of transmission occasions.

(3) Case a3

The P groups of transmission occasions include the second group of transmission occasions and a fourth group of transmission occasions (that is, P=2), the second group of transmission occasions corresponds to the first threshold in the P thresholds, the fourth group of transmission occasions corresponds to a third threshold in the P thresholds, and the first threshold is less than the third threshold.

In this case, when the measurement value of the first cell is less than the first threshold, the terminal device may send the preamble on the plurality of transmission occasions of the second group of transmission occasions; when the measurement value of the first cell is greater than or equal to the first threshold and less than the third threshold, the terminal device may send the preamble on a plurality of transmission occasions of the fourth group of transmission occasions; or when the measurement value of the first cell is greater than or equal to the third threshold, the terminal device may send the preamble on one of the first group of transmission occasions.

(4) Case a4

The P groups of transmission occasions include the second group of transmission occasions and the fourth group of transmission occasions, the second group of transmission occasions corresponds to the first threshold in the P thresholds, and the fourth group of transmission occasions corresponds to the third threshold in the P thresholds. The Q groups of transmission occasions include the third group of transmission occasions (that is, Q=1), and the third group of transmission occasions corresponds to the second threshold in the Q thresholds. The first threshold is less than the third threshold, and the third threshold is less than the second threshold. For example, a quantity of retransmission times of a preamble corresponding to the second group of transmission occasions may be different from a quantity of retransmission times of a preamble corresponding to the fourth group of transmission occasions. For example, the quantity of retransmission times of the preamble corresponding to the second group of transmission occasions is greater than the quantity of retransmission times of the preamble corresponding to the fourth group of transmission occasions.

In this case, when the measurement value of the first cell is less than the first threshold, the terminal device may send the preamble on the plurality of transmission occasions of the second group of transmission occasions; when the measurement value of the first cell is greater than or equal to the first threshold and less than the third threshold, the terminal device may send the preamble on the plurality of transmission occasions of the fourth group of transmission occasions; when the measurement value of the first cell is greater than or equal to the third threshold and less than the second threshold, the terminal device may send the preamble on one of the third group of transmission occasions; or when the measurement value of the first cell is greater than or equal to the second threshold, the terminal device may send the preamble on one of the first group of transmission occasions.

It may be understood that in Case a3 and Case a4, P=2 is used as an example for description. In another possible case, P may alternatively be greater than 2. When P is greater than 2, for implementation of selecting, by the terminal device, a transmission occasion for sending the preamble, refer to a case in which P=2. Details are not described again. In addition, in Case a2 and Case a4, Q=1 is used as an example for description. In another possible case, Q may alternatively be greater than or equal to 2. When Q is greater than or equal to 2, for implementation of selecting, by the terminal device, a transmission occasion for sending the preamble, refer to a case in which P is greater than or equal to 2. Details are not described again.

When preamble retransmission and retransmission of Msg3 are independent of each other, there may be four types of terminal devices in a network. A first-type terminal device is a terminal device that supports both preamble retransmission and retransmission of Msg3. A second-type terminal device is a terminal device that does not support preamble retransmission but supports retransmission of Msg3. A third-type terminal device is a terminal device that supports neither preamble retransmission nor retransmission of Msg3. A fourth-type terminal device is a terminal device that supports preamble retransmission but does not support retransmission of Msg3. For this case, the following describes a possible implementation with reference to FIG. 10.

FIG. 10 is a schematic flowchart corresponding to a communication method according to an embodiment of this application. As shown in FIG. 10, the method includes the following steps.

S1001: An access network device sends fifth configuration information to a terminal device. Correspondingly, the terminal device receives the fifth configuration information. The fifth configuration information is used to configure a plurality of groups of transmission occasions, the plurality of groups of transmission occasions include a first group of transmission occasions that supports neither preamble retransmission nor retransmission of the message 3, and further include at least two of the following: P groups of transmission occasions that support preamble retransmission, Q groups of transmission occasions that support retransmission of the message 3, and W groups of transmission occasions that support both preamble retransmission and retransmission of the message 3. The P groups of transmission occasions respectively correspond to P thresholds, the Q groups of transmission occasions respectively correspond to Q thresholds, and the W groups of transmission occasions respectively correspond to W thresholds, where P, Q, and W are all positive integers.

For example, the access network device may send fourth configuration information to the terminal device by using a system message. The fourth configuration information may further include other possible information, for example, a threshold 1.

S1002: The terminal device selects, from the plurality of groups of transmission occasions based on a measurement value of a first cell and at least one of the P thresholds, the Q thresholds, and the W thresholds, a transmission occasion for sending a preamble. The terminal device may be a first-type terminal device.

The following describes some possible implementations of S1003 with reference to Case b1 to Case b4.

(1) Case b1

The plurality of groups of transmission occasions include the first group of transmission occasions, the P groups of transmission occasions, and the W groups of transmission occasions. For example, the P groups of transmission occasions include a second group of transmission occasions, and the second group of transmission occasions corresponds to a first threshold. The W groups of transmission occasions include a fifth group of transmission occasions, and the fifth group of transmission occasions corresponds to a fourth threshold in the W thresholds. The first threshold is greater than the fourth threshold.

In this case, in Manner 1, when the measurement value of the first cell is less than the fourth threshold, the terminal device may send the preamble on a plurality of transmission occasions of the fifth group of transmission occasions; or when the measurement value of the first cell is greater than or equal to the fourth threshold, the terminal device may send the preamble on one of the first group of transmission occasions.

In Manner 2, when the measurement value of the first cell is less than the fourth threshold, the terminal device may send the preamble on the plurality of transmission occasions of the fifth group of transmission occasions; when the measurement value of the first cell is greater than or equal to the fourth threshold and less than the first threshold, the terminal device may send the preamble on a plurality of transmission occasions of the second group of transmission occasions; or when the measurement value of the first cell is greater than or equal to the first threshold, the terminal device may send the preamble on one of the first group of transmission occasions.

(2) Case b2

The plurality of groups of transmission occasions include the first group of transmission occasions, the Q groups of transmission occasions, and the W groups of transmission occasions. For example, the Q groups of transmission occasions include a third group of transmission occasions, and the third group of transmission occasions corresponds to a second threshold. The W groups of transmission occasions include the fifth group of transmission occasions, and the fifth group of transmission occasions corresponds to the fourth threshold in the W thresholds. The second threshold is greater than the fourth threshold.

In this case, when the measurement value of the first cell is less than the fourth threshold, the terminal device may send the preamble on the plurality of transmission occasions of the fifth group of transmission occasions; when the measurement value of the first cell is greater than or equal to the fourth threshold and less than the second threshold, the terminal device may send the preamble on one of the third group of transmission occasions; or when the measurement value of the first cell is greater than or equal to the second threshold, the terminal device may send the preamble on one of the first group of transmission occasions.

Alternatively, the terminal device may select, with reference to Manner 1 in Case b 1, a transmission occasion for sending the preamble.

(3) Case b3

The plurality of groups of transmission occasions include the first group of transmission occasions, the P groups of transmission occasions, and Q groups of transmission occasions. For example, the P groups of transmission occasions include the second group of transmission occasions, and the second group of transmission occasions corresponds to the first threshold. The Q groups of transmission occasions include the third group of transmission occasions, and the third group of transmission occasions corresponds to the second threshold. The second threshold is greater than the first threshold.

In this case, in Manner 1, when the measurement value of the first cell is less than the first threshold, the terminal device may send the preamble on the plurality of transmission occasions of the second group of transmission occasions; when the measurement value of the first cell is greater than or equal to the first threshold and less than the second threshold, the terminal device may send the preamble on one of the third group of transmission occasions; or when the measurement value of the first cell is greater than or equal to the second threshold, the terminal device may send the preamble on one of the first group of transmission occasions.

In Manner 2, the terminal device may select, based on a preamble retransmission characteristic, a transmission occasion for sending the preamble, that is, the terminal device may select, from the first group of transmission occasions and the P groups of transmission occasions, a transmission occasion for sending the preamble. For example, when the measurement value of the first cell is less than the first threshold, the terminal device may send the preamble on the plurality of transmission occasions of the second group of transmission occasions; or when the measurement value of the first cell is greater than or equal to the first threshold, the terminal device sends the preamble on one of the first group of transmission occasions. In an example, the access network device may send first indication information to the terminal device. The first indication information indicates the terminal device to select, based on the preamble retransmission characteristic, a transmission occasion for sending the preamble.

In Manner 3, the terminal device may select, based on a retransmission characteristic of the message 3, a transmission occasion for sending the preamble, that is, the terminal device may select, from the first group of transmission occasions and the Q groups of transmission occasions, a transmission occasion for sending the preamble. For example, when the measurement value of the first cell is less than the second threshold, the terminal device may send the preamble on one of the third group of transmission occasions; or when the measurement value of the first cell is greater than or equal to the second threshold, the terminal device may send the preamble on one of the first group of transmission occasions. In an example, the access network device may send second indication information to the terminal device. The second indication information indicates the terminal device to select, based on the retransmission characteristic of the message 3, a transmission occasion for sending the preamble.

(4) Case b4

The plurality of groups of transmission occasions include the first group of transmission occasions, the P groups of transmission occasions, the Q groups of transmission occasions, and the W groups of transmission occasions. For example, the P groups of transmission occasions include the second group of transmission occasions, and the second group of transmission occasions corresponds to the first threshold in the P thresholds. The Q groups of transmission occasions include the third group of transmission occasions, and the third group of transmission occasions corresponds to the second threshold in the Q thresholds. The W groups of transmission occasions include the fifth group of transmission occasions, and the fifth group of transmission occasions corresponds to the fourth threshold in the W thresholds. The second threshold is greater than the fourth threshold, the second threshold is greater than the first threshold, and the first threshold is greater than the fourth threshold.

In this case, when the measurement value of the first cell is less than the fourth threshold, the terminal device may send the preamble on the plurality of transmission occasions of the fifth group of transmission occasions; or when the measurement value of the first cell is greater than or equal to the fourth threshold, the terminal device may select, with reference to Manner 1, Manner 2, or Manner 3 described in Case b3, a transmission occasion for sending the preamble.

It may be understood that, in Case b1 to Case b4, P=1, Q=1, and W=1 are used as an example for description. In another possible case, P may be greater than or equal to 2, Q may be greater than or equal to 2, and W may be greater than or equal to 2. When P is greater than or equal to 2, Q is greater than or equal to 2, or W is greater than or equal to 2, for specific implementation, refer to the foregoing case in which P=2. Details are not described again.

According to the method shown in FIG. 9 or FIG. 10, the terminal device may select an appropriate transmission occasion from the plurality of groups of transmission occasions based on an actual requirement to send the preamble, so as to effectively increase a random access success probability of the terminal device. This avoids a waste of transmission resources caused by an excessively large quantity of times that the terminal device retransmits the preamble or a random access failure caused by an excessively small quantity of times that the terminal device retransmits the preamble.

The foregoing mainly describes the solutions provided in embodiments of this application from a perspective of interaction between communication apparatuses. It may be understood that, to implement the foregoing functions, an access network device and a terminal device may include corresponding hardware structures and/or software modules for implementing functions. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division of functional units may be performed on the access network device and the terminal device based on the foregoing method example. For example, each functional unit may be obtained through division based on a corresponding function, or two or more functions may be integrated into one unit. The integrated unit may be implemented in a form of hardware, or may be implemented in a form of a software functional unit.

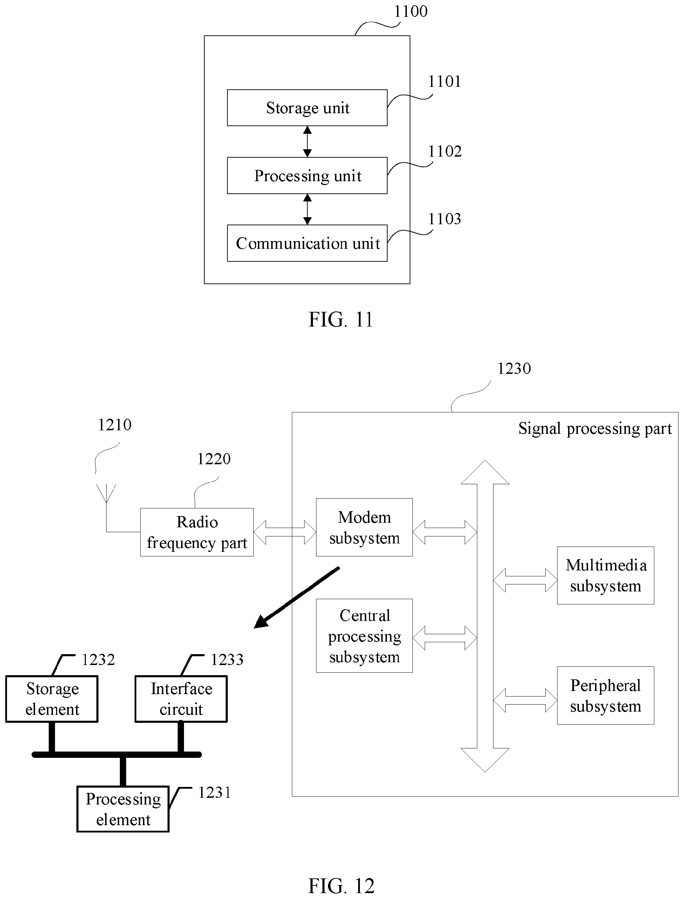

When an integrated unit is used, FIG. 11 is a block diagram of a possible example of an apparatus according to an embodiment of this application. As shown in FIG. 11, the apparatus 1100 may include a processing unit 1102 and a communication unit 1103. The processing unit 1102 is configured to control and manage an action of the apparatus 1100. The communication unit 1103 is configured to support communication between the apparatus 1100 and another device. Optionally, the communication unit 1103 is also referred to as a transceiver unit, and may include a receiving unit and/or a sending unit, respectively configured to perform a receiving operation and a sending operation. The apparatus 1100 may further include a storage unit 1101 that is configured to store program code and/or data of the apparatus 1100.

The apparatus 1100 may be the terminal device in the foregoing embodiments. The processing unit 1102 may support the apparatus 1100 in performing actions of the terminal device in the foregoing method examples. Alternatively, the processing unit 1102 mainly performs an internal action of the terminal device in the method examples, and the communication unit 1103 may support communication between the apparatus 1100 and another device.

For example, in an embodiment, the communication unit 1103 is configured to: receive first configuration information and second configuration information from the access network device, where the first configuration information is used to configure a first transmission occasion corresponding to a first synchronization signal broadcast channel block SSB, the second configuration information is used to configure M second transmission occasions corresponding to the first transmission occasion, and the M second transmission occasions and the first transmission occasion correspond to a same SSB; and initially transmit, on the first transmission occasion, a preamble corresponding to the first SSB, and retransmit the preamble on each of the M second transmission occasions, where M is a positive integer.

The apparatus 1100 may be the access network device in the foregoing embodiment. The processing unit 1102 may support the apparatus 1100 in performing actions of the access network device in the foregoing method examples. Alternatively, the processing unit 1102 mainly performs an internal action of the access network device in the method examples, and the communication unit 1103 may support communication between the apparatus 1100 and another device.

For example, in an embodiment, the processing unit 1102 is configured to: determine first configuration information and second configuration information, where the first configuration information is used to configure a first transmission occasion corresponding to a first SSB, the second configuration information is used to configure M second transmission occasions corresponding to the first transmission occasion, and the M second transmission occasions and the first transmission occasion correspond to a same SSB. The communication unit 1103 is configured to: send the first configuration information and the second configuration information.

It should be understood that division of the units in the foregoing apparatus is merely logical function division. During actual implementation, all or some of the units may be integrated into one physical entity, or may be physically separated. In addition, all the units in the apparatus may be implemented in a form in which a processing element invokes software, or may be implemented in a form of hardware; or some units may be implemented in a form in which a processing element invokes software, and some units are implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element, or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the form of the chip, the sending unit is an interface circuit that is of the chip and that is configured to send a signal to another chip or apparatus.

FIG. 12 is a diagram of a terminal device according to an embodiment of this application. The terminal device may be used in the communication system shown in FIG. 1, and is configured to implement operations of the terminal device in the foregoing embodiments. As shown in FIG. 12, the terminal device includes an antenna 1210, a radio frequency part 1220, and a signal processing part 1230. The antenna 1210 is connected to the radio frequency part 1220. In a downlink direction, the radio frequency part 1220 receives, through the antenna 1210, information sent by a network device, and sends, to the signal processing part 1230 for processing, the information sent by the network device. In an uplink direction, the signal processing part 1230 processes information of the terminal device, and sends the processed information to the radio frequency part 1220; and the radio frequency part 1220 processes the information of the terminal device, and then sends the processed information to the network device through the antenna 1210.

The signal processing part 1230 may include a modem subsystem, configured to process data at each communication protocol layer. The signal processing part 1230 may further include a central processing subsystem, configured to process an operating system and an application layer of the terminal device. In addition, the signal processing part 1230 may further include another subsystem, for example, a multimedia subsystem or a peripheral subsystem. The multimedia subsystem is configured to control a camera, a screen display, and the like of the terminal device. The peripheral subsystem is configured to connect to another device. The modem subsystem may be a separately disposed chip.

The modem subsystem may include one or more processing elements 1231, for example, include a main control CPU and another integrated circuit. In addition, the modem subsystem may further include a storage element 1232 and an interface circuit 1233. The storage element 1232 is configured to store data and a program. However, a program used to perform the method performed by the terminal device in the foregoing methods may not be stored in the storage element 1232, but is stored in a memory outside the modem subsystem, and is loaded and used by the modem subsystem when to be used. The interface circuit 1233 is configured to communicate with another subsystem.

The modem subsystem may be implemented by using a chip. The chip includes at least one processing element and an interface circuit. The processing element is configured to perform the steps of any method performed by the terminal device. The interface circuit is configured to communicate with another apparatus. In an implementation, units of the terminal device that implement the steps in the foregoing methods may be implemented by a program scheduled by a processing element. For example, an apparatus used for the terminal device includes a processing element and a storage element. The processing element invokes a program stored in the storage element, to perform the method performed by the terminal device in the foregoing method embodiment. The storage element may be a storage element whose processing element is located on a same chip, that is, an on-chip storage element.

In another implementation, the program used to perform the method performed by the terminal device in the foregoing method may be in a storage element located on a different chip from the processing element, that is, an off-chip storage element. In this case, the processing element invokes or loads the program from the off-chip storage element to the on-chip storage element, to invoke and perform the method performed by the terminal device in the foregoing method embodiment.

In still another implementation, units of the terminal device that implement the steps in the foregoing method may be configured as one or more processing elements. The processing elements are disposed in the modem subsystem. The processing element herein may be an integrated circuit, for example, one or more ASICs, one or more DSPs, one or more FPGAs, or a combination of the types of integrated circuits. These integrated circuits may be integrated together to form a chip.

Units of the terminal device that implement the steps in the foregoing method may be integrated together, and implemented in a form of SOC. The SOC chip is configured to implement the foregoing method. At least one processing element and a storage element may be integrated into the chip, and the processing element invokes a program stored in the storage element to implement the foregoing method performed by the terminal device. Alternatively, at least one integrated circuit may be integrated into the chip, to implement the foregoing method performed by the terminal device. Alternatively, with reference to the foregoing implementations, functions of some units may be implemented by a program invoked by the processing element, and functions of some units are implemented by the integrated circuit.

It can be learned that the foregoing apparatus used for the terminal device may include at least one processing element and an interface circuit. The at least one processing element is configured to perform any one of the methods that are performed by the terminal device and that are provided in the foregoing method embodiments. The processing element may perform some or all steps performed by the terminal device, in a first manner, to be specific, by invoking the program stored in the storage element; or may perform some or all steps performed by the terminal device, in a second manner, to be specific, by using a hardware integrated logic circuit in the processor element in combination with instructions; or may certainly perform, by combining the first manner and the second manner, some or all steps performed by the terminal device.

The processing element herein is the same as that described above, and may be implemented by using a processor. A function of the processing element may be the same as a function of the processing unit described in FIG. 11. For example, the processing element may be a general-purpose processor, for example, a CPU, or may be one or more integrated circuits configured to implement the foregoing method, for example, one or more ASICs, one or more microprocessors DSPs, or one or more FPGAs, or a combination of at least two of these forms of integrated circuits. The storage element may be implemented by using a memory, and a function of the storage element may be the same as a function of the storage unit described in FIG. 11. The storage element may be a memory, or may be a general name of a plurality of memories.

The terminal device shown in FIG. 12 can implement all processes related to the terminal device in the foregoing method embodiment. Operations and/or functions of the modules in the terminal device shown in FIG. 12 are respectively used to implement the corresponding processes in the foregoing method embodiment. For details, refer to the descriptions in the foregoing method embodiment. To avoid repetition, detailed descriptions are properly omitted herein.

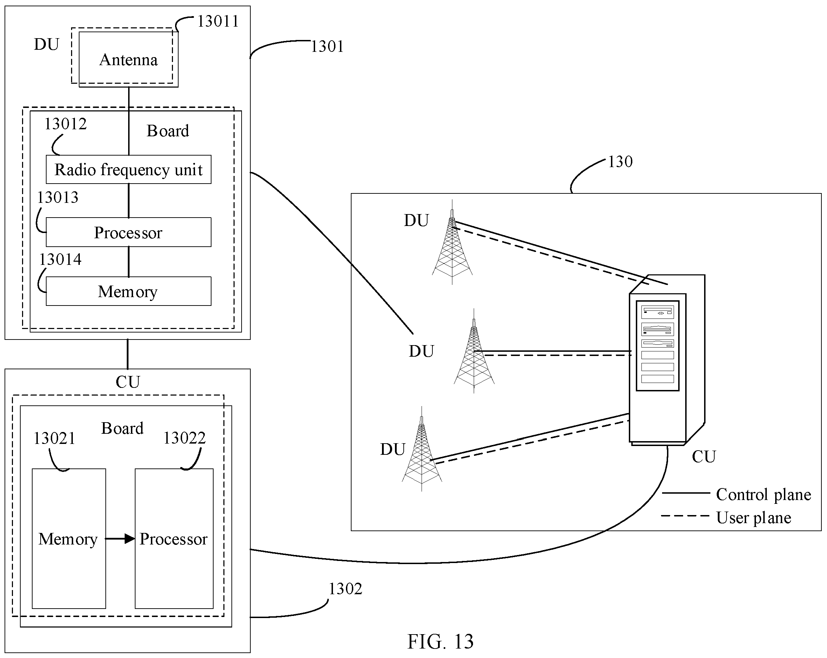

FIG. 13 is a diagram of a structure of an access network device according to an embodiment of this application. The access network device (or base station) may be used in the communication system shown in FIG. 1, to perform functions of the access network device in the foregoing method embodiment. As shown in FIG. 13, the access network device 130 may include one or more DUs 1301 and one or more CUs 1302. The DU 1301 may include at least one antenna 13011, at least one radio frequency unit 13012, at least one processor 13013, and at least one memory 13014. The DU 1301 part is mainly configured to: receive and send radio frequency signals, perform conversion between a radio frequency signal and a baseband signal, and perform some baseband processing. The CU 1302 may include at least one processor 13022 and at least one memory 13021.

The CU 1302 part is mainly configured to: perform baseband processing, control the access network device, and the like. The DU 1301 and the CU 1302 may be physically arranged together, or may be physically arranged separately, that is, a distributed base station. The CU 1302 is a control center of the access network device, may also be referred to as a processing unit, and is mainly configured to complete a baseband processing function. For example, the CU 1302 may be configured to control the access network device to perform operation processes related to the access network device in the foregoing method embodiment.

In addition, optionally, the access network device 130 may include one or more radio frequency units, one or more DUs, and one or more CUs. The DU may include at least one processor 13013 and at least one memory 13014, the radio frequency unit may include at least one antenna 13011 and at least one radio frequency unit 13012, and the CU may include at least one processor 13022 and at least one memory 13021.

In an example, the CU 1302 may include one or more boards. A plurality of boards may jointly support a radio access network (for example, a 5G network) with a single access indication, or may separately support radio access networks (for example, an LTE network, a 5G network, or another network) of different access standards. The memory 13021 and the processor 13022 may serve one or more boards. In other words, a memory and a processor may be disposed on each board. Alternatively, a plurality of boards may share a same memory and a same processor. In addition, a necessary circuit may further be disposed on each board. The DU 1301 may include one or more boards. A plurality of boards may jointly support a radio access network (for example, a 5G network) with a single access indication, or may separately support radio access networks (for example, an LTE network, a 5G network, or another network) of different access standards. The memory 13014 and the processor 13013 may serve one or more boards. In other words, a memory and a processor may be disposed on each board. Alternatively, a plurality of boards may share a same memory and a same processor. In addition, a necessary circuit may further be disposed on each board.

The access network device shown in FIG. 13 can implement all processes related to the access network device in the foregoing method embodiment. Operations and/or functions of the modules in the access network device shown in FIG. 13 are respectively used to implement corresponding processes in the foregoing method embodiment. For details, refer to the descriptions in the foregoing method embodiment. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one item (piece) of the following" or a similar expression thereof refers to any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, to enable a series of operations and steps to be performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A communication method, wherein the method comprises:

receiving first configuration information and second configuration information from an access network device, wherein the first configuration information is used to configure a first transmission occasion corresponding to a first synchronization signal broadcast channel block SSB, the second configuration information is used to configure M second transmission occasions corresponding to the first transmission occasion, and the M second transmission occasions and the first transmission occasion correspond to a same SSB; and
initially transmitting, on the first transmission occasion, a preamble corresponding to the first SSB, and retransmitting the preamble on each of the M second transmission occasions, wherein M is a positive integer.

2. The method according to claim 1, wherein the second configuration information comprises at least one of the following:

a value of M;
first information, wherein the first information is used to determine time domain positions of the M second transmission occasions; or
second information, wherein the second information is used to determine frequency domain positions of the M second transmission occasions.

3. The method according to claim 2, wherein the first information comprises:

a first time domain interval, wherein the first time domain interval is a time domain interval between any adjacent transmission occasions among the first transmission occasion and the M second transmission occasions; or
M time domain intervals, wherein the M time domain intervals comprise a time domain interval between the first transmission occasion and a 1st second transmission occasion in the M second transmission occasions and a time domain interval between each of the M second transmission occasions except the 1st second transmission occasion and a previous second transmission occasion, or a time domain interval between each of the M second transmission occasions and the first transmission occasion.

4. The method according to claim 2 or 3, wherein the second information comprises:

a first frequency domain interval, wherein the first frequency domain interval is a frequency domain interval between any adjacent transmission occasions among the first transmission occasion and the M second transmission occasions; or
M frequency domain intervals, wherein the M frequency domain intervals comprise a frequency domain interval between the first transmission occasion and the 1st second transmission occasion in the M second transmission occasions and a frequency domain interval between each of the M second transmission occasions except the 1st second transmission occasion and a previous second transmission occasion, or a frequency domain interval between each of the M second transmission occasions and the first transmission occasion, or a frequency domain interval between each of the M second transmission occasions and a reference point.

5. The method according to claim 2, wherein the M second transmission occasions respectively belong to M sets of transmission occasions;

the first information comprises time domain position information corresponding to each of the M sets of transmission occasions; and
the second information comprises frequency domain position information corresponding to each of the M sets of transmission occasions.

6. The method according to claim 1, wherein the second configuration information comprises at least one of the following:

a value of M;

a first offset, wherein the first offset is used to determine a first time domain interval and a first frequency domain interval, the first time domain interval is a time domain interval between any adjacent transmission occasions among the first transmission occasion and the M second transmission occasions, and the first frequency domain interval is a frequency domain interval between any adjacent transmission occasions among the first transmission occasion and the M second transmission occasions; and

M offsets, wherein the M offsets are used to determine M time domain intervals and M frequency domain intervals, wherein

the M time domain intervals comprise a time domain interval between the first transmission occasion and a 1st second transmission occasion in the M second transmission occasions and a time domain interval between each of the M second transmission occasions except the 1st second transmission occasion and a previous second transmission occasion, or a time domain interval between each of the M second transmission occasions and the first transmission occasion; and

the M frequency domain intervals comprise a frequency domain interval between the first transmission occasion and the 1st second transmission occasion in the M second transmission occasions and a frequency domain interval between each of the M second transmission occasions except the 1st second transmission occasion and a previous second transmission occasion, or a frequency domain interval between each of the M second transmission occasions and the first transmission occasion, or a frequency domain interval between each of the M second transmission occasions and a reference point.

7. The method according to claim 6, wherein the first offset satisfies the following formula:

offset=symbol_offset+frequency_offset*MAX_SYMBOL_OFFSET, wherein
offset is the first offset, symbol_offset is the first time domain interval, frequency _offset is the second frequency domain interval, and MAX_SYMBOL_OFFSET is a sum of 1 and a maximum value of symbol _offset.

8. A communication method, wherein the method comprises:

determining first configuration information and second configuration information, wherein the first configuration information is used to configure a first transmission occasion corresponding to a first SSB, the second configuration information is used to configure M second transmission occasions corresponding to the first transmission occasion, and the M second transmission occasions and the first transmission occasion correspond to a same SSB; and
sending the first configuration information and the second configuration information.

9. The method according to claim 8, wherein the second configuration information comprises at least one of the following:

a value of M;
first information, wherein the first information is used to determine time domain positions of the M second transmission occasions; and
second information, wherein the second information is used to determine frequency domain positions of the M second transmission occasions.

10. The method according to claim 9, wherein the first information comprises:

a first time domain interval, wherein the first time domain interval is a time domain interval between any adjacent transmission occasions among the first transmission occasion and the M second transmission occasions; or
M time domain intervals, wherein the M time domain intervals comprise a time domain interval between the first transmission occasion and a 1st second transmission occasion in the M second transmission occasions and a time domain interval between each of the M second transmission occasions except the 1st second transmission occasion and a previous second transmission occasion, or a time domain interval between each of the M second transmission occasions and the first transmission occasion.

11. The method according to claim 9 or 10, wherein the second information comprises:

a first frequency domain interval, wherein the first frequency domain interval is a frequency domain interval between any adjacent transmission occasions among the first transmission occasion and the M second transmission occasions; or

M frequency domain intervals, wherein the M frequency domain intervals comprise a frequency domain interval between the first transmission occasion and the 1st second transmission occasion in the M second transmission occasions and a frequency domain interval between each of the M second transmission occasions except the 1st second transmission occasion and a previous second transmission occasion, or a frequency domain interval between each of the M second transmission occasions and the first transmission occasion, or a frequency domain interval between each of the M second transmission occasions and a reference point.

12. The method according to claim 9, wherein the M second transmission occasions respectively belong to M sets of transmission occasions;

the first information comprises time domain position information corresponding to each of the M sets of transmission occasions; and
the second information comprises frequency domain position information corresponding to each of the M sets of transmission occasions.

13. The method according to claim 8, wherein the second configuration information comprises at least one of the following:

a value of M;
a first offset, wherein the first offset is used to determine a first time domain interval and a first frequency domain interval, the first time domain interval is a time domain interval between any adjacent transmission occasions among the first transmission occasion and the M second transmission occasions, and the first frequency domain interval is a frequency domain interval between any adjacent transmission occasions among the first transmission occasion and the M second transmission occasions; and
M offsets, wherein the M offsets are used to determine M time domain intervals and M frequency domain intervals, wherein
the M time domain intervals comprise a time domain interval between the first transmission occasion and a 1st second transmission occasion in the M second transmission occasions and a time domain interval between each of the M second transmission occasions except the 1st second transmission occasion and a previous second transmission occasion, or a time domain interval between each of the M second transmission occasions and the first transmission occasion; and
the M frequency domain intervals comprise a frequency domain interval between the first transmission occasion and the 1st second transmission occasion in the M second transmission occasions and a frequency domain interval between each of the M second transmission occasions except the 1st second transmission occasion and a previous second transmission occasion, or a frequency domain interval between each of the M second transmission occasions and the first transmission occasion, or a frequency domain interval between each of the M second transmission occasions and a reference point.

14. The method according to claim 13, wherein the first offset satisfies the following formula:

offset=symbol_offset+frequency_offset*MAX_SYMBOL_OFFSET, wherein
offset is the first offset, symbol_offset is the first time domain interval, frequency _offset is the second frequency domain interval, and MAX_SYMBOL _OFFSET is a sum of 1 and a maximum value of symbol _offset.

15. A communication apparatus, comprising a module configured to perform the method according to any one of claims 1 to 7.

16. A communication apparatus, comprising a module configured to perform the method according to any one of claims 8 to 14.

17. A communication apparatus, comprising a processor, wherein the processor is coupled to a memory, and the memory stores a computer program; and the processor is configured to invoke the computer program in the memory, to enable the communication apparatus to perform the method according to any one of claims 1 to 7.

18. A communication apparatus, comprising a processor, wherein the processor is coupled to a memory, and the memory stores a computer program; and the processor is configured to invoke the computer program in the memory, to enable the communication apparatus to perform the method according to any one of claims 8 to 14.

19. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 7 by using a logic circuit or by executing a code instruction.

20. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 8 to 14 by using a logic circuit or by executing a code instruction.

21. A communication system, wherein the communication system comprises the communication apparatus according to claim 15, 17, or 19 and the communication apparatus according to claim 16, 18, or 20.

22. A computer-readable storage medium, wherein the storage medium stores a computer program or instructions; and when the computer program or the instructions are executed by a computer, the method according to any one of claims 1 to 14 is implemented.

23. A computer program product, wherein when a computer reads and executes the computer program product, the computer is enabled to perform the method according to any one of claims 1 to 14.

FIG. 1

FIG. 2

EP 4 468 639 A1

| Terminal device | | Access network device |
| --- | --- | --- |

S301: First configuration information, used to configure a first transmission occasion corresponding to a first SSB; and second configuration information, used to configure M second transmission occasions corresponding to the first transmission occasion

S302: The terminal device initially transmits, on the first transmission occasion, a first preamble corresponding to the first SSB

S303: The terminal device retransmits the first preamble on each of the M second transmission occasions

FIG. 3

Frequency
domain

Frequency
domain interval b

Transmission
occasion b

Frequency
domain
interval c

Frequency
domain interval d

Frequency
domain
interval a

Transmission
occasion a

Time domain
interval a

Time domain
interval b

Time domain
interval c

Time domain
interval d

Time domain

FIG. 4

EP 4 468 639 A1

Frequency domain

Y PRBs

Y PRBs

Transmission occasion 1

Transmission occasion 1b

Transmission occasion 3b

Transmission occasion 1a

Transmission occasion 3a

Transmission occasion 0b

Transmission occasion 2b

Transmission occasion 3

Transmission occasion 0a

Transmission occasion 2a

Transmission occasion 0

Transmission occasion 2

X slots

X slots

Time domain

First transmission occasion

Second transmission occasion corresponding to the first transmission occasion

FIG. 5A

Frequency
domain

Y2 PRBs

Transmission
occasion 1b

Transmission
occasion 3b

Y1 PRBs

Transmission
occasion 1a

Transmission
occasion 3a

Transmission
occasion 0b

Transmission
occasion 2b

Transmission
occasion 1

Transmission
occasion 3

Transmission
occasion 0a

Transmission
occasion 2a

Transmission
occasion 0

Transmission
occasion 2

X1 slots

X2 slots

Time domain

First transmission
occasion

Second transmission occasion
corresponding to the first
transmission occasion

FIG. 5B

FIG. 6

| Terminal device | | Access network device |
|---|---|---|

S701: Third configuration information

S702: The terminal device initially transmits, on a first transmission occasion, a first preamble corresponding to a first SSB

S703: The terminal device retransmits the first preamble on at least one second-type transmission occasion corresponding to the first SSB

FIG. 7

EP 4 468 639 A1

Frequency
domain

| Time unit 0 | Time unit 1 | Time unit 2 | Time unit 3 | |
|---|---|---|---|---|
| Transmission occasion 0 | Transmission occasion 0 | Transmission occasion 0 | Transmission occasion 0 | Transmission occasion 0 |
| Transmission occasion 1 | Transmission occasion 1 | Transmission occasion 1 | Transmission occasion 1 | Transmission occasion 1 |
| Transmission occasion 2 | Transmission occasion 2 | Transmission occasion 2 | Transmission occasion 2 | Transmission occasion 2 |
| Transmission occasion 3 | Transmission occasion 3 | Transmission occasion 3 | Transmission occasion 3 | Transmission occasion 3 |

Time
domain

Random access
period

First period

FIG. 8

```
┌─────────────┐                                              ┌─────────────┐
│  Terminal   │                                              │   Access    │
│   device    │                                              │network device│
└─────────────┘                                              └─────────────┘
```

S901: Fourth configuration information, used to configure
a plurality of groups of transmission occasions

S902: Select, from the plurality of groups of
transmission occasions based on a measurement
value of a first cell and at least one of P thresholds
and Q thresholds, a transmission occasion for
sending a preamble

FIG. 9

```
┌─────────────┐                                              ┌─────────────┐
│  Terminal   │                                              │   Access    │
│   device    │                                              │network device│
└─────────────┘                                              └─────────────┘
```

S1001: Fifth configuration information, used to configure
a plurality of groups of transmission occasions

S1002: Select, from the plurality of groups of
transmission occasions based on a measurement
value of a first cell and at least one of P thresholds,
Q thresholds, and W thresholds, a transmission
occasion for sending a preamble

FIG. 10

1100

Storage unit — 1101

Processing unit — 1102

Communication unit — 1103

FIG. 11

1230

Signal processing part

1210

1220

Radio frequency part

Modem subsystem

Central processing subsystem

Multimedia subsystem

Peripheral subsystem

1232 — Storage element

1233 — Interface circuit

1231 — Processing element

FIG. 12

FIG. 13

## INTERNATIONAL SEARCH REPORT

| | International application No. |
|---|---|
| | **PCT/CN2023/076911** |

**A. CLASSIFICATION OF SUBJECT MATTER**

H04L5/00(2006.01)i;H04W 74/00(2009.01)i

According to International Patent Classification (IPC) or to both national classification and IPC

**B. FIELDS SEARCHED**

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNTXT, VCN, DWPI, ENTXT, 3GPP, CNKI: 配置, 同步信号广播信道块, 传输机会, 第一, 第二, 前导码, 重传, 时域, 频域, 位置, 间隔, 偏移量, configur+, SSB, offset, synchronization signal broadcast channel block, transmission occasion, RO, retransmi+

**C. DOCUMENTS CONSIDERED TO BE RELEVANT**

| Category* | Citation of document, with indication, where appropriate, of the relevant passages | Relevant to claim No. |
|---|---|---|
| X | CN 113543360 A (BEIJING SAMSUNG TELECOM R&D CENTER et al.) 22 October 2021 (2021-10-22)<br>description, paragraphs [0006]-[0021] and [0078]-[0116] | 1-5, 8-12, 15-23 |
| A | CN 111867129 A (VIVO COMMUNICATION TECHNOLOGY CO., LTD.) 30 October 2020 (2020-10-30)<br>entire document | 1-23 |
| A | CN 112040558 A (CHINA ACADEMY OF INFORMATION AND COMMUNICATIONS TECHNOLOGY) 04 December 2020 (2020-12-04)<br>entire document | 1-23 |
| A | CN 113330787 A (GUANGDONG OPPO MOBILE COMMUNICATIONS CO., LTD.) 31 August 2021 (2021-08-31)<br>entire document | 1-23 |
| A | WO 2021031046 A1 (HUAWEI TECHNOLOGIES CO., LTD.) 25 February 2021 (2021-02-25)<br>entire document | 1-23 |

☑ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **09 May 2023** | **17 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/076911**

**C.** **DOCUMENTS CONSIDERED TO BE RELEVANT**

| Category* | Citation of document, with indication, where appropriate, of the relevant passages | Relevant to claim No. |
|---|---|---|
| A | Moderator (ZTE). "Summary on the physical layer aspects of small data transmission" *3GPP TSG-RAN WG1 Meeting #106-e R1-2108561*, 27 August 2021 (2021-08-27), entire document | 1-23 |

Form PCT/ISA/210 (second sheet) (July 2022)

**INTERNATIONAL SEARCH REPORT**
Information on patent family members

International application No.

**PCT/CN2023/076911**

| Patent document cited in search report | | | Publication date (day/month/year) | Patent family member(s) | | | Publication date (day/month/year) |
|---|---|---|---|---|---|---|---|
| CN | 113543360 | A | 22 October 2021 | WO | 2021215834 | A1 | 28 October 2021 |
| | | | | EP | 4122270 | A1 | 25 January 2023 |
| CN | 111867129 | A | 30 October 2020 | None | | | |
| CN | 112040558 | A | 04 December 2020 | None | | | |
| CN | 113330787 | A | 31 August 2021 | WO | 2021023056 | A1 | 11 February 2021 |
| | | | | EP | 3928568 | A1 | 29 December 2021 |
| | | | | US | 2022038239 | A1 | 03 February 2022 |
| WO | 2021031046 | A1 | 25 February 2021 | US | 2022174752 | A1 | 02 June 2022 |
| | | | | EP | 4017198 | A1 | 22 June 2022 |
| | | | | CA | 3151640 | A1 | 25 February 2021 |
| | | | | CN | 114246014 | A | 25 March 2022 |
| | | | | VN | 87064 | A | 27 June 2022 |

Form PCT/ISA/210 (patent family annex) (July 2022)

**REFERENCES CITED IN THE DESCRIPTION**

**Patent documents cited in the description**

- CN 202210173063